# EUROPEAN PATENT APPLICATION

(11) **EP 4 850 894 A1**
(43) Date of publication of application: **09.12.2026**
(21) Application number: 24922135.9
(22) Date of filing: 11.11.2024
(51) Int. Cl.: B29C 65/08, B65D 35/02

(54) **METHOD FOR PRODUCING SHEET WELDED STRUCTURE, METHOD FOR PRODUCING TUBE CONTAINER, AND SHEET WELDED STRUCTURE AND TUBE CONTAINER**

(30) Priority: 30.01.2024 JP 2024011672
(71) Applicant: Fuji Seal International, Inc., Osaka-shi, Osaka 532-0003 (JP)
(72) Inventor: ODAGIRI, Shun, Osaka-shi, Osaka 532-0003 (JP); MORITA, Kosuke, Osaka-shi, Osaka 532-0003 (JP); UEMURA, Shuhei, Osaka-shi, Osaka 532-0003 (JP)
(74) Representative: Prüfer & Partner mbB Patentanwälte · Rechtsanwälte
(86) International application number: PCT/JP2024/039919
(87) International publication number: WO 2025/164025

(57) **Abstract**

A sheet welded structure is provided that is formed by firmly welding two sheets containing a polyester-based resin to each other. In a method of manufacturing a sheet welded structure according to the present invention, a first sheet portion having a thickness aₗ and a second sheet portion having a thickness a₂ are welded to each other. The method of manufacturing a sheet welded structure satisfies relational expressions (1) and (2), where b is a distance in a thickness direction between a surface closest to the first sheet portion on a first surface and a surface farthest from the first sheet portion on a second surface at the start of pressing against first sheet portion by a first member, and c' is a distance in the thickness direction between the second surface and a second pressing surface when the first member and a second member come closest to each other during welding of the first sheet portion and the second sheet portion.

## Description

### TECHNICAL FIELD

The present invention relates to a method of manufacturing a sheet welded structure, a method of manufacturing a tube container, a sheet welded structure, and a tube container.

### BACKGROUND ART

PTL 1 (Japanese Patent No. 6976032) discloses a conventional tube container and a method of manufacturing the same. The tube container is composed of a dispensing unit and a body portion. In the body portion, a first surface side of a first side edge of a film is superimposed on a second surface side of a second side edge, and the superimposed first side edge and second side edge are welded to each other. An inner layer constituting an inner surface side of the body portion and an outer layer constituting an outer surface side of the body portion are each formed of a resin containing a non-adsorbent resin. It is disclosed that examples of the non-adsorbent resin of the inner layer and the outer layer include a polyester-based resin and a cyclic polyolefin-based resin.

The above-described welding is performed by heat sealing. It is also disclosed that examples of the heat sealing include bar sealing, rotary roll sealing, belt sealing, impulse sealing, high-frequency sealing, and ultrasonic sealing.

### CITATION LIST

### PATENT LITERATURE

PTL 1: Japanese Patent No. 6976032

### SUMMARY OF INVENTION

### TECHNICAL PROBLEM

For example, a tube container as disclosed in PTL 1 or the like is provided with a sheet welded structure formed by welding sheets (films) to each other. In order to improve the recyclability of containers such as this tube container, it has been studied to form a sheet welded structure using sheets containing a polyester-based resin. However, there is room for further improvement in firmly welding sheets containing a polyester-based resin to each other.

The present invention has been made in view of the above problem. An object of the present invention is to provide a sheet welded structure formed by firmly welding two sheets containing a polyester-based resin to each other.

### SOLUTION TO PROBLEM

A method of manufacturing a sheet welded structure according to a first aspect of the present invention includes superimposing a first sheet portion and a second sheet portion on each other in a thickness direction, the first sheet portion containing a polyester-based resin and having a thickness a₁, the second sheet portion containing a polyester-based resin and having a thickness a₂; and welding the first sheet portion and the second sheet portion to each other by pressing the first sheet portion with a first member from a first side in the thickness direction and pressing the second sheet portion with a second member from a second side in the thickness direction against the first sheet portion and the second sheet portion superimposed on each other. The first member is one of an anvil and an ultrasonic horn, and has a first pressing surface that presses the first sheet portion. The second member is the other of the anvil and the ultrasonic horn, and has a second pressing surface that presses the second sheet portion. The first pressing surface includes one or more first surfaces and one or more second surfaces. When viewed from the first sheet portion at the start of pressing by the first member, the one or more first surfaces are arranged in a pattern and include a surface closest to the first sheet portion. When viewed from the first sheet portion at the start of pressing by the first member, the one or more second surfaces are arranged in a pattern so as not to overlap with the one or more first surfaces, are located further away than the first surface, and include a surface farthest from the first sheet portion. The method of manufacturing a sheet welded structure satisfies relational expressions (1) and (2) below:
[Math 1] $b > {a}_{1}$ (1); and
[Math 2] $c ′ < \left({a}_{1}+{a}_{2}\right)$ (2), where b is a distance in the thickness direction between the surface closest to the first sheet portion on the one or more first surfaces and the surface farthest from the first sheet portion on the one or more second surfaces at the start of pressing against the first sheet portion by the first member, and c' is a distance in the thickness direction between the second surface and the second pressing surface when the first member and the second member come closest to each other during welding of the first sheet portion and the second sheet portion.

A sheet welded structure according to a second aspect of the present invention is a sheet welded structure formed by superimposing a first sheet portion and a second sheet portion on each other in a thickness direction such that the first sheet portion is located on a first side in the thickness direction and the second sheet portion is located on a second side in the thickness direction, and welding the first sheet portion and the second sheet portion to each other, the first sheet portion containing a polyester-based resin and having a thickness a₁, the second sheet portion containing a polyester-based resin and having a thickness a₂. The sheet welded structure includes one or more thin portions and one or more thick portions. The one or more thin portions are arranged in a pattern and include a thinnest portion having a smallest thickness in the thickness direction in the sheet welded structure, when the sheet welded structure is viewed from the first side in the thickness direction. The one or more thick portions are arranged in a pattern so as not to overlap with the one or more thin portions, have a thickness larger in the thickness direction than the one or more thin portions, and include a portion having a largest thickness in the thickness direction in the sheet welded structure, when the sheet welded structure is viewed from the first side in the thickness direction. The sheet welded structure satisfies relational expressions (5) and (6) below:
[Math 3] $\left(c-d\right) > {a}_{1}$ (5); and
[Math 4] $c < \left({a}_{1}+{a}_{2}\right)$ (6), where c is the thickness of the thickest portion in the thick portion, and d is the thickness of a thinnest portion in the thin portion.

### ADVANTAGEOUS EFFECTS OF INVENTION

According to the present invention, a sheet welded structure can be provided that is formed by firmly welding two sheets containing a polyester-based resin to each other.

### BRIEF DESCRIPTION OF DRAWINGS

Fig. 1 is a schematic sectional perspective view showing a sheet portion and the like for forming a sheet welded structure according to an embodiment of the present invention.
Fig. 2 is a schematic sectional perspective view showing the sheet welded structure according to the embodiment of the present invention.
Fig. 3 is a schematic sectional view showing a first sheet portion and a second sheet portion.
Fig. 4 is a flowchart showing a method of manufacturing a sheet welded structure.
Fig. 5 is a schematic sectional view showing sheet portions and the like at the start of pressing against the first sheet portion and the second sheet portion.
Fig. 6 is a schematic sectional view showing sheet portions and the like when pressing against the first sheet portion and the second sheet portion is stopped.
Fig. 7 is a partial plan view showing a first member viewed from the first pressing surface side.
Fig. 8 is a plan view showing a first pressing surface according to a modification.
Fig. 9 is a plan view showing a first pressing surface according to another modification.
Fig. 10 is a sectional view showing a first member of Fig. 9 as viewed in the direction of arrows X-X.
Fig. 11 is a schematic sectional view showing a sheet welded structure.
Fig. 12 is a plan view showing the sheet welded structure viewed from one side.
Fig. 13 is a plan view showing a sheet welded structure according to a modification.
Fig. 14 is a plan view showing a sheet welded structure according to another modification.
Fig. 15 is a sectional view showing the sheet welded structure of Fig. 14 as viewed in the direction of arrows XV-XV.
Fig. 16 is a perspective view showing a tube container including a sheet welded structure according to the present embodiment.
Fig. 17 is a schematic sectional view showing a tube container of Fig. 16 as viewed in the direction of arrows XVII-XVII.
Fig. 18 is a schematic exploded perspective view of the tube container.
Fig. 19 is a schematic sectional view showing a sheet immediately before the formation of an end seal portion by ultrasonic welding.
Fig. 20 is a flowchart showing a method of manufacturing a tube container according to the present embodiment.
Fig. 21 is a perspective view showing a pack container including a sheet welded structure according to the present embodiment.
Fig. 22 is a perspective view showing a pack container including a sheet welded structure according to the present embodiment, which is partially unfolded.

### DESCRIPTION OF EMBODIMENTS

Hereinafter, a sheet welded structure and a method of manufacturing the same according to an embodiment of the present invention will be described. Further, a container such as a tube container including the sheet welded structure according to the embodiment of the present invention, and a method of manufacturing the same will be described. In the following description of the embodiment, like portions in the drawings are denoted by like reference signs, and description thereof will not be repeated.

### <Sheet Welded Structure>

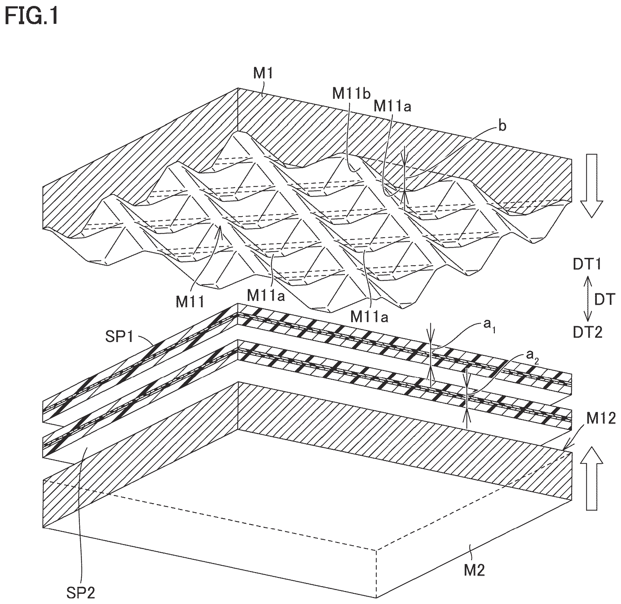

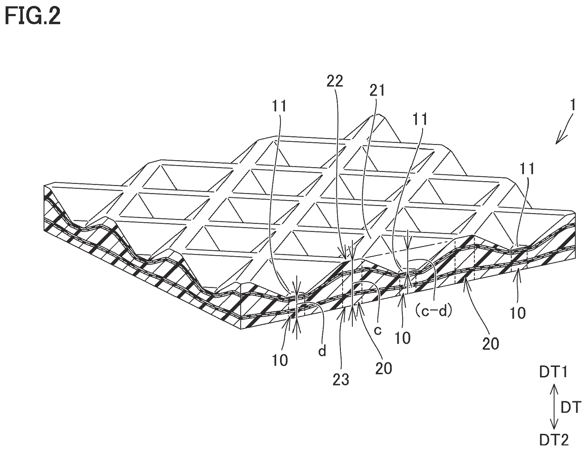

Fig. 1 is a schematic sectional perspective view showing a sheet portion and the like for forming a sheet welded structure according to an embodiment of the present invention. Fig. 2 is a schematic sectional perspective view showing a sheet welded structure according to the embodiment of the present invention.

As shown in Figs. 1 and 2, a sheet welded structure 1 is formed by superimposing a first sheet portion SP1 and a second sheet portion SP2 on each other in a thickness direction DT, and welding first sheet portion SP1 and second sheet portion SP2 to each other. First sheet portion SP1 and second sheet portion SP2 are superimposed on each other such that first sheet portion SP1 is located on a first side DT1 in thickness direction DT and second sheet portion SP2 is located on a second side DT2 in thickness direction DT.

First, first sheet portion SP1 and second sheet portion SP2, which are materials of sheet welded structure 1, will be described. Both first sheet portion SP1 and second sheet portion SP2 contain a polyester-based resin.

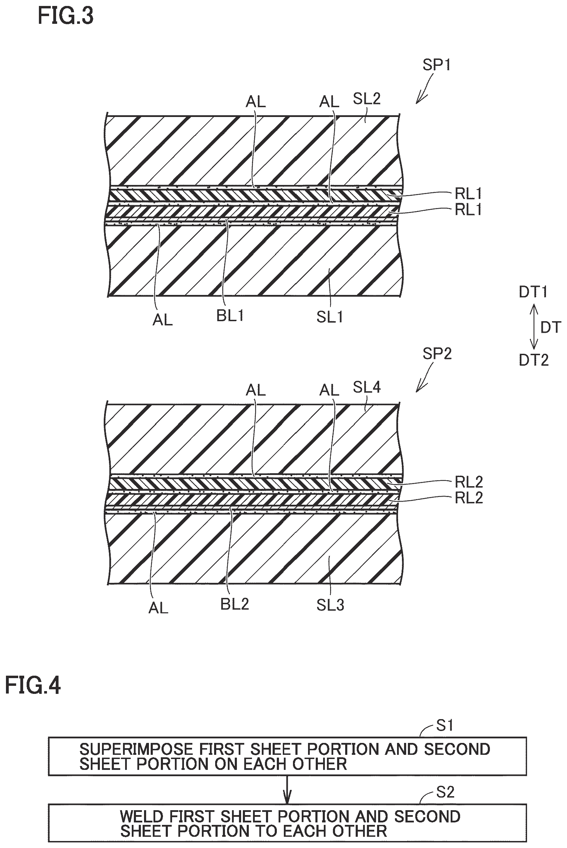

First, first sheet portion SP1 will be described. Fig. 3 is a schematic sectional view showing a first sheet portion and a second sheet portion. As shown in Figs. 1 and 3, first sheet portion SP1 according to the present embodiment includes a first base material layer SL1, one or more first reinforcement layers RL1, and a second base material layer SL2.

In the present embodiment, first base material layer SL1 is the outermost layer on second side DT2 of first sheet portion SP1. First base material layer SL1 contains a polyester-based resin as a main component. From the viewpoint of improving recyclability, first base material layer SL1 preferably contains a polyester-based resin as a main component. The content of the polyester-based resin in first base material layer SL1 is preferably 95% by mass or more, or 99% by mass or more.

Examples of the polyester-based resin include polyethylene terephthalate, polyethylene naphthalate, glycol-modified polyethylene terephthalate (PETG, i.e., polyethylene terephthalate in which a part of a glycol component is modified with cyclohexanedimethanol (CHDM), neopentyl glycol, or the like), and polylactic acid. First base material layer SL1 preferably contains only a polyester-based resin as a resin component.

From the viewpoint of recyclability of sheet welded structure 1 and a container including the same or the like, the polyester-based resin in first base material layer SL1 is preferably polyethylene terephthalate such as homopolyethylene terephthalate or copolymerized polyethylene terephthalate obtained by copolymerizing ethylene glycol, terephthalic acid, and a third component, or glycol-modified polyethylene terephthalate, and more preferably homopolyethylene terephthalate. Further, from the viewpoint of welding first sheet portion SP1 and second sheet portion SP2 to each other with relatively low energy and efficiently transmitting ultrasonic vibration, the polyester-based resin in first base material layer SL1 is preferably an amorphous polyester-based resin (such as amorphous polyethylene terephthalate and glycol-modified polyethylene terephthalate). Therefore, from both viewpoints of the recyclability of sheet welded structure 1 and a container including the same or the like and weldability between first sheet portion SP1 and second sheet portion SP2, first base material layer SL1 is most preferably amorphous homopolyethylene terephthalate. From the viewpoint of reducing environmental impact, the polyester-based resin in first base material layer SL1 is preferably made of a recycled raw material or a biomass raw material. However, when contents are accommodated in a container including sheet welded structure 1, the polyester-based resin in first base material layer SL1 is also preferably made of a virgin raw material.

First base material layer SL1 may be a single-layer film or a part of a laminated film. A film (single-layer film or laminated film) constituting first base material layer SL1 is an unstretched film. As a result, since crystallization of the surface of first base material layer SL1 is suppressed, weldability with second sheet portion SP2 is improved during ultrasonic welding described later for forming sheet welded structure 1.

One or more first reinforcement layers RL1 are laminated on first side DT1 of first base material layer SL1 in thickness direction DT. This improves the strength of sheet welded structure 1 and a container including the same. Consequently, breakage of the container when the container drops can be suppressed. One or more first reinforcement layers RL1 may be laminated on first base material layer SL1 with another layer in between.

In the present embodiment, the plurality of first reinforcement layers RL1 are laminated on first side DT1 of first base material layer SL1 in thickness direction DT. The plurality of first reinforcement layers RL1 may have the same configuration. The plurality of first reinforcement layers RL1 may have configurations different from each other. The plurality of first reinforcement layers RL1 are laminated on each other. The plurality of first reinforcement layers RL1 may be laminated on each other with another layer in between.

First reinforcement layer RL1 contains a resin component as a main component, and contains, for example, a polyester-based resin, a polyolefin-based resin, or a polyamide-based resin as a main component. From the viewpoint of improving recyclability, first reinforcement layer RL1 preferably contains a polyester-based resin as a main component, similarly to first base material layer SL1. From the viewpoint of improving strength, first reinforcement layer RL1 also preferably contains a polyamide-based resin as a main component.

The polyester-based resin of first reinforcement layer RL1 is preferably polyethylene terephthalate such as homopolyethylene terephthalate or copolymerized polyethylene terephthalate obtained by copolymerizing ethylene glycol, terephthalic acid, and a third component, glycol-modified polyethylene terephthalate, or polybutylene terephthalate (PBT). First reinforcement layer RL1 also preferably contains only a polyester-based resin or polybutylene terephthalate as a resin component.

From the viewpoint of recyclability, the polyester-based resin of first reinforcement layer RL1 is preferably polyethylene terephthalate such as homopolyethylene terephthalate or copolymerized polyethylene terephthalate obtained by copolymerizing ethylene glycol, terephthalic acid, and a third component, or glycol-modified polyethylene terephthalate, and more preferably homopolyethylene terephthalate. From the viewpoint of reducing environmental impact, the polyester-based resin in first reinforcement layer RL1 is preferably made of a recycled raw material or a biomass raw material. From the viewpoint of reducing manufacturing costs of sheet welded structure 1 and a container including the same, the polyester-based resin in first reinforcement layer RL1 is also preferably made of a virgin raw material.

From the viewpoint of further improving the strength of sheet welded structure 1, the polyester-based resin of first reinforcement layer RL1 is also preferably polybutylene terephthalate. Polybutylene terephthalate has a lower melting point and a lower glass transition temperature than polyethylene terephthalate. However, polybutylene terephthalate has a higher impact strength than polyethylene terephthalate. Thus, by adopting polybutylene terephthalate as the polyester-based resin of first reinforcement layer RL1, breakage of the container from sheet welded structure 1 can be further suppressed while improving the recyclability of sheet welded structure 1 and the container including the same.

Examples of the polyolefin-based resin of first reinforcement layer RL1 include polyethylene, polypropylene, and a cyclic olefin polymer. From the viewpoint of recyclability, the polyolefin-based resin of first reinforcement layer RL1 is preferably polypropylene. The polyolefin-based resin may be polyethylene.

Examples of the polyamide-based resin of first reinforcement layer RL1 include aliphatic polyamides such as polyamide 6 (nylon 6), polyamide 66 (nylon 66), polyamide 610 (nylon 610), polyamide 10 (nylon 10), polyamide 12 (nylon 12), and polyamide 6-12 (nylon 6-12) and copolymers thereof, semi-aromatic polyamides synthesized from an aromatic dicarboxylic acid and an aliphatic diamine. The polyamide-based resin is preferably polyamide 6 (nylon 6) or polyamide 66 (nylon 66), which are relatively easy to handle.

A film containing a polyamide-based resin such as nylon 6 or nylon 66 has a higher drop strength than a polyester-based resin such as polyethylene terephthalate. Therefore, first reinforcement layer RL1 containing a polyamide-based resin can further suppress breakage of the container including sheet welded structure 1 from sheet welded structure 1 when the container drops.

A film constituting first reinforcement layer RL1 is a biaxially stretched film. This allows the thickness to be reduced while maintaining the toughness of first sheet portion SP1. Further, when first sheet portion SP1 includes a first barrier layer BL1, which will be described later, since the film constituting first reinforcement layer RL1 is a biaxially stretched film, cracking or the like of first barrier layer BL1 can be suppressed. First reinforcement layer RL1 may be a single-layer film or a part of a laminated film. When first reinforcement layer RL1 is a part of a laminated film, first reinforcement layer RL1 may be configured as one layer of the laminated film together with first base material layer SL1. In this case, first reinforcement layer RL1 may be directly laminated on first base material layer SL1 without any adhesive layer or the like in between.

First reinforcement layer RL1 is preferably composed of, for example, a biaxially stretched film containing a polyester-based resin as a main component. This allows the thickness of sheet welded structure 1 to be further reduced while maintaining the toughness of sheet welded structure 1 and a container including the same. Furthermore, the recyclability of the container including sheet welded structure 1 is improved.

First reinforcement layer RL1 may be a biaxially stretched film containing polyethylene terephthalate. This further improves the recyclability of the container including sheet welded structure 1. First reinforcement layer RL1 may be a biaxially stretched film containing polybutylene terephthalate. As a result, compared with a case where first reinforcement layer RL1 is a biaxially stretched film containing polyethylene terephthalate, the strength of sheet welded structure 1 and the container including the same can be improved, and also, the formation of pinholes can be suppressed.

When a plurality of first reinforcement layers RL1 are laminated on first side DT1 of first base material layer SL1 in thickness direction DT, at least one layer of the plurality of first reinforcement layers RL1 may be a biaxially stretched film. However, each of first reinforcement layers RL1 is preferably a biaxially stretched film. The plurality of first reinforcement layers RL1 all contain a resin component that can be contained in first reinforcement layer RL1 described above. Resin components contained in the plurality of first reinforcement layers RL1 may be the same as or different from each other among the plurality of first reinforcement layers RL1. Preferably, first sheet portion SP1 includes two first reinforcement layers RL1, first reinforcement layer RL1 on the second base material layer SL2 side is a biaxially stretched film containing polyethylene terephthalate as a main component, and first reinforcement layer RL1 on the first base material layer SL1 side is a biaxially stretched film containing polybutylene terephthalate as a main component. Further, first sheet portion SP1 may include three first reinforcement layers RL1, and in particular, first reinforcement layer RL1 on the second base material layer SL2 side and first reinforcement layer RL1 on the first base material layer SL1 side are preferably biaxially stretched films containing polyethylene terephthalate as a main component, and first reinforcement layer RL1 therebetween is preferably a biaxially stretched film containing polybutylene terephthalate as a main component.

In the present embodiment, second base material layer SL2 is the outermost layer on first side DT1 of second sheet portion SP2. Second base material layer SL2 is laminated on a side opposite to first base material layer SL1 when viewed from one or more first reinforcement layers RL1. In other words, second base material layer SL2 is arranged on first side DT1 of one or more first reinforcement layers RL1 in thickness direction DT.

In the present embodiment, second base material layer SL2 contains a resin component as a main component, and may contain, for example, a polyolefin-based resin or a polyester-based resin as a main component. Second base material layer SL2 may contain a polyester-based resin similarly to first base material layer SL1 as a resin component, or may contain a polyester-based resin, a polyolefin-based resin, or a polyamide-based resin that can be adopted as the resin component of first reinforcement layer RL1. Second base material layer SL2 preferably contains a resin component of the same type as the main component of first base material layer SL1 as a main component. From the viewpoint of recyclability, second base material layer SL2 also preferably contains a polyester-based resin as a main component, similarly to first base material layer SL1.

The polyester-based resin that can be adopted as the main component of second base material layer SL2 is preferably polyethylene terephthalate or glycol-modified polyethylene terephthalate, and more preferably homopolyethylene terephthalate. From the viewpoint of reducing environmental impact, the polyester-based resin in second base material layer SL2 is preferably made of a recycled raw material or a biomass raw material. From the viewpoint of reducing manufacturing costs of sheet welded structure 1 and a container including the same, the polyester-based resin in second base material layer SL2 is also preferably made of a virgin raw material.

Second base material layer SL2 may be a single-layer film or a part of a laminated film. A film (single-layer film or laminated film) constituting second base material layer SL2 may be composed of any of an unstretched film, a uniaxially stretched film, or a biaxially stretched film. Second base material layer SL2 is preferably composed of an unstretched film or a uniaxially stretched film, and more preferably composed of an unstretched film. Particularly preferably, second base material layer SL2 contains a polyester-based resin as a main component and is composed of an unstretched film.

In the present embodiment, first sheet portion SP1 further includes first barrier layer BL1. First barrier layer BL1 is located further on second side DT2 of one or more first reinforcement layers RL1 in thickness direction DT, but may be located further on first side DT1 of one or more first reinforcement layers RL1. First barrier layer BL1 may be located between the plurality of first reinforcement layers RL1. Note that first sheet portion SP1 does not have to include first barrier layer BL1.

A material constituting first barrier layer BL1 is not particularly limited. Examples of first barrier layer BL1 include a ceramic barrier layer such as a silica barrier layer or an alumina barrier layer, and a metal barrier layer such as an aluminum barrier layer. The ceramic barrier layer may be a transparent vapor-deposited layer. In the present embodiment, first barrier layer BL1 is laminated by vapor deposition on one of the films constituting one or more first reinforcement layers RL1.

First sheet portion SP1 may include a plurality of first barrier layers BL1. In this case, in first sheet portion SP1, the plurality of first barrier layers BL1 may be laminated by vapor deposition on the respective first reinforcement layers RL1. First sheet portion SP1 may simultaneously include one or more first reinforcement layers RL1 on which first barrier layer BL1 is vapor-deposited and one or more first reinforcement layers RL1 on which first barrier layer BL1 is not vapor-deposited. For example, first sheet portion SP1 may include both a ceramic barrier layer and a metal barrier layer as a plurality of first barrier layers BL1, or may include two ceramic barrier layers.

In the present embodiment, first sheet portion SP1 further includes a plurality of adhesive layers AL. The respective adhesive layers AL are located between first base material layer SL1 and first barrier layer BL1, between second base material layer SL2 and first reinforcement layer RL1, and between first reinforcement layers RL1 adjacent to each other. An adhesive of adhesive layer AL is not particularly limited, and is preferably a dry laminating adhesive. The dry laminating adhesive may be a conventionally known one.

First sheet portion SP1 may further include a printing layer for improving aesthetic properties. The printing layer may be located, for example, on first side DT1 relative to first base material layer SL1 in thickness direction DT. First sheet portion SP1 also preferably includes no printing layer. The printing layer is made of, for example, ink. Examples of the ink include oil-based ink (including solvent-based ink including an organic solvent as a solvent), water-based ink (including water-dispersed emulsion ink), and UV-curable ink.

First sheet portion SP1 may further include an anchor coat layer. The anchor coat layer is located between the printing layer and another layer. The anchor coat layer enhances adhesion between the printing layer and the other layer. The anchor coat layer can be formed of a conventionally known anchor coating agent or the like.

When first sheet portion SP1 includes a printing layer, a transparent protective layer may be further laminated on the printing layer. The transparent protective layer may be, for example, a resin film such as a polypropylene film, or may be a layer made of transparent ink. First sheet portion SP1 may further include a heat insulating layer. The heat insulating layer is preferably composed of a foaming material made of a resin component such as polyethylene terephthalate.

The content of the polyester-based resin such as polyethylene terephthalate in first sheet portion SP1 as a whole is preferably 85% by mass or more, and more preferably 90% by mass or more.

From the viewpoint of manufacturing sheet welded structure 1 according to the present embodiment by a manufacturing method described later, the thickness (a₁) of first sheet portion SP1 is preferably, for example, 12 µm or more and 250 µm or less. The thickness (a₁) of first sheet portion SP1 is more preferably 100 µm or more, and further preferably 120 µm or more.

The thickness of first base material layer SL1 is preferably greater than that of first reinforcement layer RL1. The thickness of first base material layer SL1 is preferably 1.5 times or more, more preferably 3 times or more, and further preferably 5 times or more the thickness of first reinforcement layer RL1. The thickness of first base material layer SL1 is preferably 10 µm or more, more preferably 60 µm or more, preferably 250 µm or less, more preferably 200 µm or less, and further preferably 80 µm or less. The thickness of the first base material layer may be, for example, 50 µm, 60 µm, 70 µm, 80 µm, 90 µm, or 100 µm.

The thickness of first reinforcement layer RL1 is, for example, 5 µm or more, preferably 200 µm or less, and more preferably 100 µm or less. From the viewpoint of reducing the total thickness of first sheet portion SP1, the thickness of first reinforcement layer RL1 may be, for example, 5 µm or more and 25 µm or less. When first barrier layer BL1 is vapor-deposited on first reinforcement layer RL1, the total thickness of first reinforcement layer RL1 and first barrier layer BL1 may be 5 µm or more and 25 µm or less. The total thickness of first reinforcement layer RL1 and first barrier layer BL1 may be, for example, 12 µm or 25 µm.

The thickness of second base material layer SL2 is preferably 10 µm or more, more preferably 60 µm or more, preferably 250 µm or less, more preferably 200 µm or less, and further preferably 80 µm or less. The thickness of second base material layer SL2 may be, for example, 50 µm, 60 µm, 70 µm, 80 µm, 90 µm, or 100 µm. The thickness of second base material layer SL2 may be the same as that of first base material layer SL1. This allows second base material layer SL2 to be formed of the same film as the film constituting first base material layer SL1. Note that the thickness of second base material layer SL2 may be different from the thickness of first base material layer SL1. The thickness of second base material layer SL2 is also preferably greater than that of first base material layer SL1. Second base material layer SL2 may be the thickest layer in first sheet portion SP1. Second base material layer SL2 may be thicker than first reinforcement layer RL1.

Next, second sheet portion SP2 will be described. As shown in Figs. 1 and 3, second sheet portion SP2 according to the present embodiment includes a third base material layer SL3, one or more second reinforcement layers RL2, and a fourth base material layer SL4. Further, second sheet portion SP2 according to the present embodiment further includes a second barrier layer BL2 and a plurality of adhesive layers AL.

Second sheet portion SP2 can have the same configuration as the configuration that first sheet portion SP1 can have. In the present embodiment, third base material layer SL3, one or more second reinforcement layers RL2, fourth base material layer SL4, second barrier layer BL2, and a plurality of adhesive layers AL of second sheet portion SP2 can have configurations similar to those of first base material layer SL1, one or more first reinforcement layers RL1, second base material layer SL2, first barrier layer BL1, and the plurality of adhesive layers AL of first sheet portion SP1, respectively. In the present embodiment, first sheet portion SP1 and second sheet portion SP2 have the same configuration.

Note that fourth base material layer SL4 is welded to first base material layer SL1 of first sheet portion SP1. For this reason, fourth base material layer SL4 is preferably composed of an unstretched film or a uniaxially stretched film, and more preferably composed of an unstretched film. When fourth base material layer SL4 is composed of an unstretched film, since crystallization of the surface of fourth base material layer SL4 is suppressed, weldability with first base material layer SL1 of first sheet portion SP1 is improved during ultrasonic welding.

Further, fourth base material layer SL4 preferably contains, as a main component, the same resin component as the resin component contained in first base material layer SL1. Fourth base material layer SL4 also preferably contains a polyester-based resin as a main component, similarly to first base material layer SL1.

The content of a polyester-based resin such as polyethylene terephthalate of second sheet portion SP2 as a whole is preferably 85% by mass or more, and more preferably 90% by mass or more.

From the viewpoint of manufacturing sheet welded structure 1 according to the present embodiment by a manufacturing method described later, the thickness (a₂) of second sheet portion SP2 is preferably, for example, 12 µm or more and 250 µm or less. The thickness (a₂) of second sheet portion SP2 is more preferably 100 µm or more, and further preferably 120 µm or more.

Next, a method of manufacturing a sheet welded structure will be described. Fig. 4 is a flowchart showing a method of manufacturing a sheet welded structure.

As shown in Figs. 1 to 4, a method of manufacturing a sheet welded structure according to an embodiment of the present invention includes superimposing first sheet portion SP1 and second sheet portion SP2 on each other in thickness direction DT (step S1), and welding first sheet portion SP1 and second sheet portion SP2 to each other (step S2).

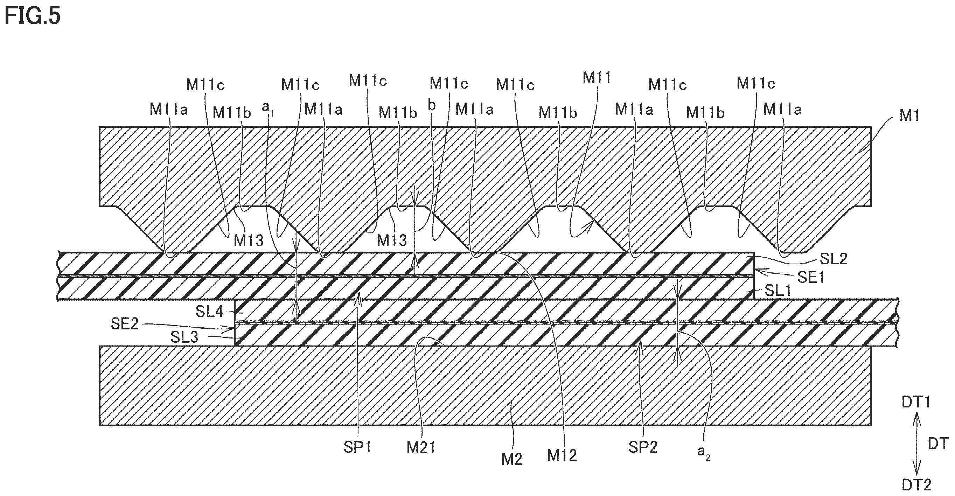

Fig. 5 is a schematic sectional view showing sheet portions and the like at the start of pressing against the first sheet portion and the second sheet portion.

As shown in Fig. 5, before step S2, a part of first sheet portion SP1 and a part of second sheet portion SP2 are superimposed on each other in thickness direction DT in step S1 in advance. In the present embodiment, first sheet portion SP1 has a first end surface SE1 facing a direction perpendicular to thickness direction DT. Second sheet portion SP2 has a second end surface SE2 facing the direction perpendicular to thickness direction DT. A part of first sheet portion SP1 and a part of second sheet portion SP2 are superimposed on each other such that first end surface SE1 and second end surface SE2 face directions opposite to each other. Further, a surface on second side DT2 of first sheet portion SP1 and a surface on first side DT1 of second sheet portion SP2 come into contact with each other. First base material layer SL1 of first sheet portion SP1 and fourth base material layer SL4 of second sheet portion SP2 come into contact with each other.

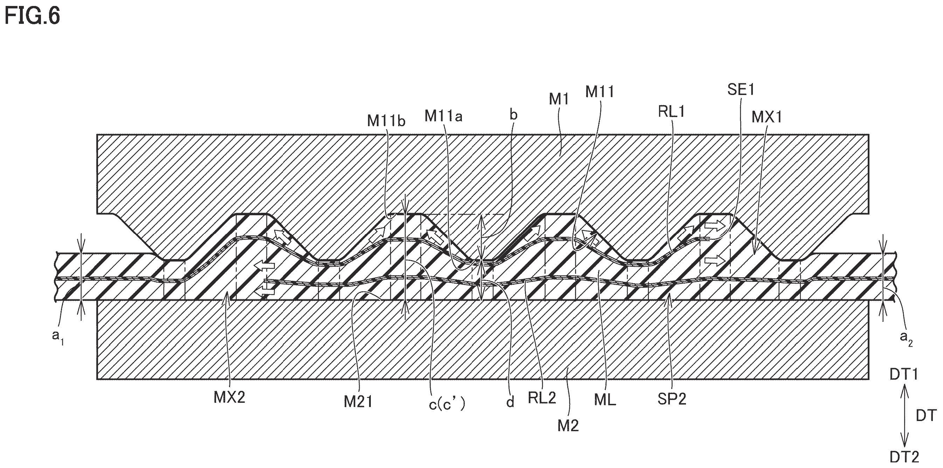

Fig. 6 is a schematic sectional view showing sheet portions and the like when pressing against the first sheet portion and the second sheet portion is stopped.

As shown in Figs. 1, 5, and 6, in step S2, first sheet portion SP1 and second sheet portion SP2 superimposed on each other are pressed so as to be sandwiched between first member M1 and second member M2. Specifically, first sheet portion SP1 is pressed by first member M1 from first side DT1 in thickness direction DT. Second sheet portion SP2 is pressed by second member M2 from second side DT2 in thickness direction DT.

First member M1 is one of an anvil and an ultrasonic horn. In the present embodiment, first member M1 is an ultrasonic horn.

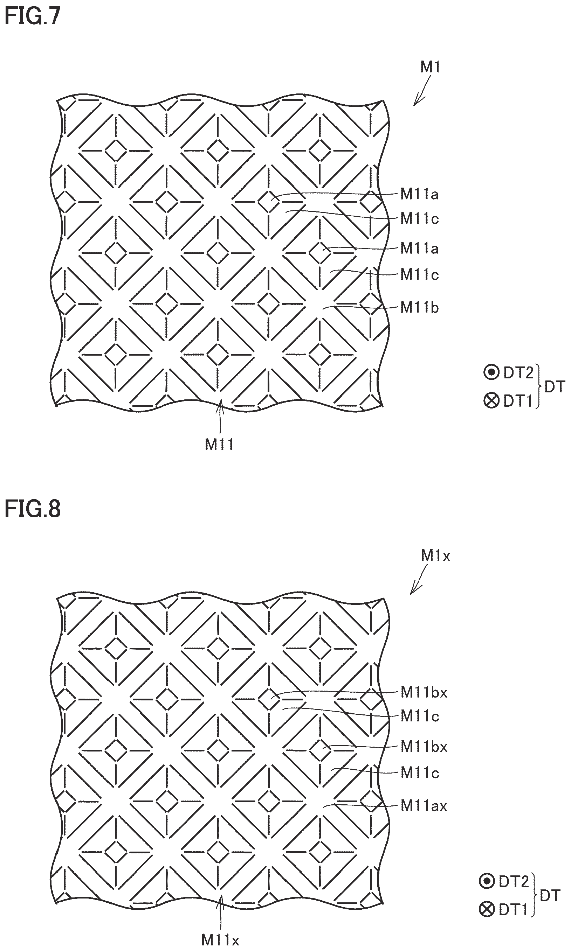

Fig. 7 is a partial plan view showing the first member when viewed from the first pressing surface side. As shown in Figs. 1 and 5 to 7, first member M1 has a first pressing surface M11 that presses first sheet portion SP1.

First pressing surface M11 includes one or more first surfaces M11a, one or more second surfaces M11b, and one or more third surfaces M11c.

The one or more first surfaces M11a are arranged in a pattern when viewed from first sheet portion SP1 at the start of pressing by first member M1 (hereinafter sometimes referred to as "when viewed from first sheet portion SP1 at the start of pressing", see Figs. 5 and 7). The pattern in which the one or more first surfaces M11a are arranged may be a pattern that can be visually recognized by the human naked eye. The pattern in which the one or more first surfaces M11a are arranged may be, for example, a stripe shape, a cross-hatch shape (lattice shape), a dot shape, a striated shape, a checkered shape, or a zigzag shape. The one or more first surfaces M11a may be arranged in a continuous pattern or may be arranged in a discontinuous (random) pattern when viewed from first sheet portion SP1 at the start of pressing.

In the present embodiment, the plurality of first surfaces M11a are arranged on first member M1. The plurality of first surfaces M11a are arranged in a dot-shaped pattern. Each of the plurality of first surfaces M11a has a substantially rectangular outer shape. The plurality of first surfaces M11a are arranged in a continuous pattern. When viewed from first sheet portion SP1 at the start of pressing, the plurality of first surfaces M11a are arranged side by side equidistantly in one direction and a direction perpendicular thereto.

The one or more first surfaces M11a include a surface closest to first sheet portion SP1 when viewed from first sheet portion SP1 at the start of pressing. In the present embodiment, each of the plurality of first surfaces M11a includes a surface closest to first sheet portion SP1 when viewed from first sheet portion SP1 at the start of pressing.

The one or more first surfaces M11a may be flat. In the present embodiment, each of the plurality of first surfaces M11a is flat. The entirety of the plurality of first surfaces M11a serves as a surface closest to first sheet portion SP1.

The one or more second surfaces M11b are arranged in a pattern so as not to overlap with first surface M11a when viewed from first sheet portion SP1 at the start of pressing. The one or more second surfaces M11b can also be arranged in a pattern in which the one or more first surfaces M11a can be arranged.

In the present embodiment, one second surface M11b is arranged on first member M1. Second surface M11b is arranged in a cross-hatch pattern. Second surface M11b is arranged so as to surround the plurality of first surfaces M11a one by one when viewed from first sheet portion SP1 at the start of pressing.

The one or more second surfaces M11b are located further away than first surface M11a when viewed from first sheet portion SP1 at the start of pressing. The one or more second surfaces M11b include a surface farthest from first sheet portion SP1 at the start of pressing. Any one of the plurality of second surfaces M11b may include this farthest surface, or each of the plurality of second surfaces M11b may include this farthest surface.

The one or more second surfaces M11b may be flat. In the present embodiment, one second surface M11b is flat. For this reason, the entirety of second surface M11b serves as a surface farthest from first sheet portion SP1.

The one or more third surfaces M11c are arranged between the one or more first surfaces M11a and the one or more second surfaces M11b. Third surface M11c connects first surface M11a to second surface M11b. In the present embodiment, the plurality of third surfaces M11c are arranged so as to surround the respective first surfaces M11a.

Third surface M11c is inclined with respect to thickness direction DT at the start by first member M1. Of third surface M11c, a first edge M12 connecting with first surface Mlla is rounded when viewed from a direction in which first edge M12 extends. Of third surface M11c, a second edge M13 connecting with second surface Mllb is rounded when viewed from a direction in which second edge M13 extends. Since first edge M12 and/or second edge M13 are rounded, cutting of first sheet portion SP1 and second sheet portion SP2 due to pressing by first member M1 can be suppressed.

Note that, as described above, the one or more first surfaces M11a and the one or more second surfaces M11b on first pressing surface M11 can be arranged in various patterns. Fig. 8 is a plan view showing a first pressing surface according to a modification. In Fig. 8, a first pressing surface M11x according to the modification is shown in a plan view similar to that of first pressing surface M11 in Fig. 7.

As shown in Fig. 8, on first pressing surface M11x according to the modification, a plurality of second surfaces M11bx may be arranged in a dot-shaped pattern. Each of the plurality of second surfaces M11bx may have a substantially rectangular outer shape. The plurality of second surfaces M11b are arranged in a continuous pattern. When viewed from first sheet portion SP1 at the start of pressing, the plurality of second surfaces M11bx may be arranged side by side equidistantly in one direction and a direction perpendicular thereto.

One first surface M11ax according to the modification may be arranged in a cross-hatch pattern. First surface M11ax may be arranged so as to surround the plurality of second surfaces M11bx one by one when viewed from first sheet portion SP1 at the start of pressing.

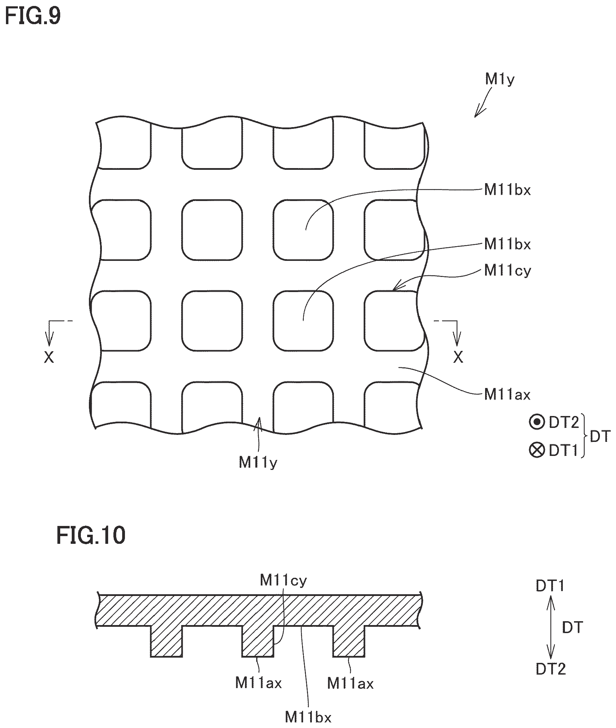

Fig. 9 is a plan view showing a first pressing surface according to another modification. Fig. 10 is a sectional view showing a first member of Fig. 9 as viewed in the direction of arrows X-X. In Fig. 9, a first pressing surface M11y according to the other modification is shown in a plan view similar to that of first pressing surface M11 in Fig. 7.

As shown in Figs. 9 and 10, on first pressing surface M11y according to the other modification, a third surface M11cy may extend perpendicularly to thickness direction DT when viewed from first sheet portion SP1 at the start of pressing.

Next, second member M2 will be described. Second member M2 is the other of an anvil and an ultrasonic horn. In the present embodiment, second member M2 is an anvil. Second member M2 has a second pressing surface M21 that presses second sheet portion SP2. In the present embodiment, second pressing surface M21 is flat. Second pressing surface M21 extends in a planar direction perpendicular to thickness direction DT when viewed from second sheet portion SP2 where pressing is started by second pressing surface M21.

As shown in Figs. 5 and 6, first pressing surface M11 of first member M1 presses first sheet portion SP1, and second pressing surface M21 of second member M2 presses second sheet portion SP2, whereby a part of first sheet portion SP1 and a part of second sheet portion SP2 are mixed while melting. In the present embodiment, the above pressing may be performed by displacing first member M1 toward second side DT2 in thickness direction DT while keeping second member M2 stationary. The above pressing may be performed by displacing second member M2 toward first side DT1 in thickness direction DT while keeping first member M1 stationary.

In Fig. 6, the flow of resin in each layer is schematically shown by outline arrows. First base material layer SL1 of first sheet portion SP1 and fourth base material layer SL4 of second sheet portion SP2 (see Fig. 5) facing each other melt and mix with each other due to vibration from the ultrasonic horn. Consequently, an integrated layer ML is formed between first reinforcement layer RL1 and second reinforcement layer RL2 (see Fig. 6). Integrated layer ML further leaks from first end surface SE1 and second end surface SE2 in a planar direction intersecting thickness direction DT due to pressing from first member M1 and second member M2.

Second base material layer SL2 of first sheet portion SP1 is pressed by first surface M11a of first pressing surface M11. Consequently, a strong pressure is locally applied to second base material layer SL2 immediately after the start of pressing, causing second base material layer SL2 to quickly melt locally due to vibration from the ultrasonic horn. The resin (a polyester-based resin in the present embodiment) of second base material layer SL2 locally melted by first surface M11a flows into a recessed space formed by second surface Mllb and third surface M11c. As a result, local melting by first surface M11a is suppressed, and pressing by second surface Mllb starts. In other words, the melted second base material layer SL2 is further uniformly pressed in the planar direction perpendicular to thickness direction DT by first pressing surface M11 (first surface M11a, second surface M11b, third surface M1 1c) and second pressing surface M21.

In the present embodiment, second surface M11b is arranged in a single cross-hatch shape. Thereby, the polyester-based resin of second base material layer SL2 melted by being pressed first by first surface M11a flows into cross-hatch-shaped recessed portions formed by second surface M11b. Since the recessed portions have a cross-hatch shape, flow paths for the polyester-based resin increase. This enables quick transition from local pressing to overall pressing.

Then, the melted second base material layer SL2 leaks from first end surface SE1 in the planar direction intersecting thickness direction DT. Integrated layer ML and second base material layer SL2 leaking from first end surface SE1 are further mixed together. In other words, first end surface SE1 is embedded in fourth base material layer SL4 by the resin of fourth base material layer SL4 that has flowed in, and thus, is not exposed. Thus, a first mixed portion MX1 formed by mixing of first base material layer SL1, second base material layer SL2, and fourth base material layer SL4 is located on first end surface SE1 of first reinforcement layer RL1.

Third base material layer SL3 of second sheet portion SP2 entirely melts due to vibration from the ultrasonic horn by being pressed from second member M2. Consequently, third base material layer SL3 leaks from second end surface SE2 in the planar direction intersecting thickness direction DT. Integrated layer ML and third base material layer SL3 leaking from second end surface SE2 are further mixed together. In other words, second end surface SE2 is embedded in first base material layer SL1 by the resin of first base material layer SL1 that has flowed in, and thus, is not exposed. Thereby, a second mixed portion MX2 formed by mixing of first base material layer SL1, second base material layer SL2, and third base material layer SL3 is located on second end surface SE2 of second reinforcement layer RL2.

Here, the method of manufacturing a sheet welded structure according to the present embodiment satisfies relational expressions (1) and (2) below:
[Math 5] $b > {a}_{1}$ (1); and
[Math 6] $c ′ < \left({a}_{1}+{a}_{2}\right)$ (2), where, as shown in Fig. 5, b is the distance in thickness direction DT between a surface closest to first sheet portion SP1 on first surface M11a and a surface farthest from first sheet portion SP1 on second surface M11b at the start of pressing against first sheet portion SP1 by first member M1, and as shown in Fig. 6, c' is the distance in thickness direction DT between second surface M11b and second pressing surface M21 when first member M1 and second member M2 come closest to each other during welding of first sheet portion SP1 and second sheet portion SP2.

According to relational expression (1) above, local pressing by first surface M11a can be performed relatively deeply in thickness direction DT before pressing by the entire first pressing surface M11, allowing first sheet portion SP1 and second sheet portion SP2 to be sandwiched with a relatively high pressing force at an initial stage of pressing. Further, at a final stage of pressing, first sheet portion SP1 and second sheet portion SP2 are reliably pressed by both first surface M11a and second surface M11b of first pressing surface M11 such that relational expression (2) above is satisfied. For this reason, even in a state where melting of the polyester-based resin has progressed, first sheet portion SP1 and second sheet portion SP2 can be sandwiched with a relatively high pressing force. Thus, sheet welded structure 1 can be provided that is formed by firmly welding first sheet portion SP1 and second sheet portion SP2 containing a polyester-based resin to each other.

Then, the method of manufacturing a sheet welded structure further satisfies relational expressions (3) and (4) below:
[Math 7] ${a}_{1} = {a}_{2}$ (3) [Math 8] $b < \left(3{a}_{1}-c′\right)$ (4) where a₁ is a thickness of first sheet portion SP1, and a₂ is a thickness of second sheet portion SP2.

Thus, by adjusting distance b so as to satisfy relational expression (4) above, first surface Mlla can be suppressed from piercing through first sheet portion SP1 and second sheet portion SP2. Consequently, partial breakage of sheet welded structure 1 can be suppressed.

Note that compared with other resins or a biaxially stretched film of a polyester-based resin (polyethylene terephthalate), an unstretched or uniaxially stretched film of a polyester-based resin (polyethylene terephthalate) quickly decreases in viscosity and melting thereof progresses upon heating, and quickly hardens upon cooling. For this reason, when second base material layer SL2 is an unstretched or uniaxially stretched film of a polyester-based resin (polyethylene terephthalate), the polyester-based resin of second base material layer SL2 that has flowed into the above-described recessed portions easily solidifies. A gap may occur between the solidified polyester-based resin of second base material layer SL2 and second surface M11b. If a gap occurs, pressing by second surface M11b becomes insufficient, and uniform pressing by first pressing surface M11 may become insufficient.

For this reason, the length of b is preferably a₁ or more and is further less than (3a₁ - c). For example, the length of b may be less than 1.5 times a₁, or may be less than or equal to 1.4 times, 1.3 times, 1.2 times, or 1.1 times a₁. The length of b is preferably greater than a₁ and less than 1.5 times a₁. As the length of b becomes shorter, occurrence of a gap between second surface M11b and the melted polyester-based resin of second base material layer SL2 can be suppressed.

Further, as described above, in the method of manufacturing sheet welded structure 1 according to the present embodiment, second surface M11b and second pressing surface M21 are both flat. Thus, at the final stage of pressing, first sheet portion SP1 and second sheet portion SP2 can be sandwiched relatively uniformly even in a state where melting of the polyester-based resin has progressed. Consequently, partial breakage of sheet welded structure 1 can be suppressed.

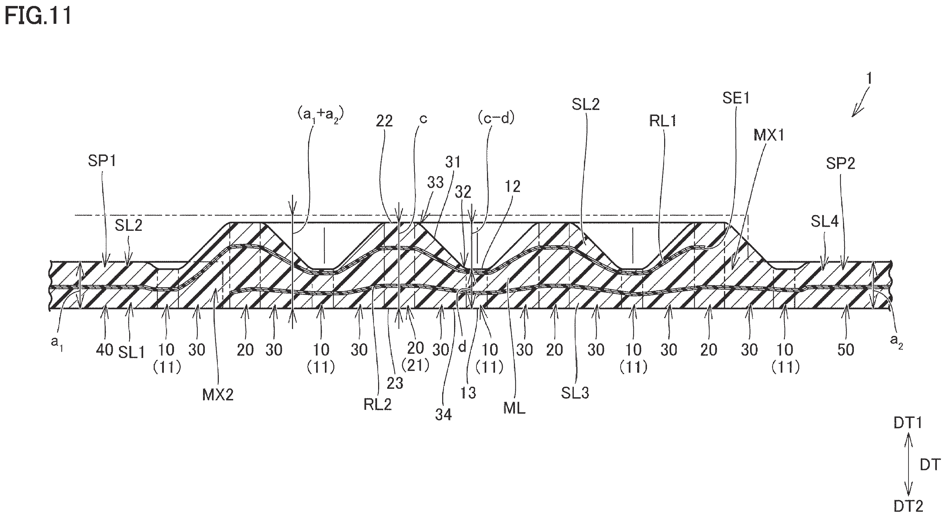

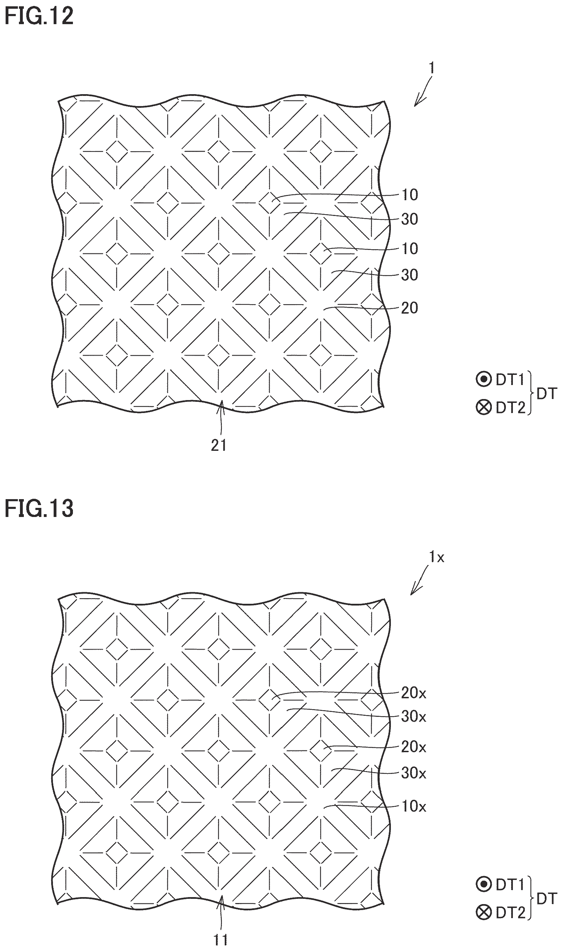

Next, sheet welded structure 1 manufactured by the above manufacturing method will be described in more detail. Fig. 11 is a schematic sectional view showing a sheet welded structure. Fig. 12 is a plan view showing the sheet welded structure viewed from one side. In Fig. 11, first sheet portion SP1 and second sheet portion SP2 shown in Fig. 5, and the sheet welded structure during melting shown in Fig. 6 are illustrated in the same sectional view.

As shown in Figs. 2, 11, and 12, sheet welded structure 1 includes one or more thin portions 10, one or more thick portions 20, one or more connection portions 30, a first extending sheet portion 40, and a second extending sheet portion 50.

The one or more thin portions 10 are arranged in a pattern when sheet welded structure 1 is viewed from first side DT1 in thickness direction DT. The pattern in which the one or more thin portions 10 are arranged may be a pattern that can be visually recognized by the human naked eye. The pattern in which the one or more thin portions 10 are arranged may be, for example, a stripe shape, a cross-hatch shape (lattice shape), a dot shape, a striated shape, a checkered shape, or a zigzag shape. The one or more thin portions 10 may be arranged in a continuous pattern or may be arranged in a discontinuous (random) pattern when viewed from first side DT1 in thickness direction DT.

In the present embodiment, the one or more thin portions 10 are a plurality of thin portions 10. The plurality of thin portions 10 are arranged in a dot-shaped pattern. Each of the plurality of thin portions 10 is arranged in a continuous pattern when viewed from first side DT1 in thickness direction DT. When viewed from first side DT1 in thickness direction DT, the plurality of thin portions 10 are arranged side by side equidistantly in one direction and a direction perpendicular thereto, respectively.

The one or more thin portions 10 include a portion 11 having the smallest thickness in thickness direction DT in sheet welded structure 1. In the present embodiment, each of the plurality of thin portions 10 includes portion 11.

The one or more thin portions 10 have a first structural surface 12 and a second structural surface 13. First structural surface 12 faces first side DT1 in thickness direction DT. First structural surface 12 may be flat. In the present embodiment, each of the plurality of first structural surfaces 12 is flat. The plurality of first structural surfaces 12 are arranged side by side in a direction perpendicular to thickness direction DT.

Second structural surface 13 faces second side DT2 in thickness direction DT. Second structural surface 13 may be flat. In the present embodiment, each of the plurality of second structural surfaces 13 is flat. The plurality of second structural surfaces 13 are arranged side by side in the direction perpendicular to thickness direction DT. In the present embodiment, the entirety of the plurality of thin portions 10 serves as portion 11 having the smallest thickness in thickness direction DT in sheet welded structure 1.

The one or more thick portions 20 are arranged so as not to overlap with thin portion 10 as sheet welded structure 1 is viewed from first side DT1 in thickness direction DT. The one or more thick portions 20 are arranged in a pattern when viewed from first side DT1 in thickness direction DT. The one or more thick portions 20 can also be arranged in a pattern in which the one or more thin portions 10 can be arranged.

Sheet welded structure 1 according to the present embodiment has one thick portion 20. Thick portion 20 is arranged in a cross-hatch pattern. Thick portion 20 is arranged so as to surround the plurality of thin portions 10 one by one when viewed from first side DT1 in thickness direction DT.

The one or more thick portions 20 are thicker in thickness direction DT than thin portion 10. Each of the plurality of thick portions 20 may be thicker in thickness direction DT than thin portion 10. The one or more thick portions 20 include a portion 21 having the greatest thickness in thickness direction DT in sheet welded structure 1. Any one of the plurality of thick portions 20 may include portion 21, or each of the plurality of thick portions 20 may include portion 21.

The one or more thick portions 20 have a third structural surface 22 and a fourth structural surface 23. Third structural surface 22 faces first side DT1 in thickness direction DT. In the present embodiment, third structural surface 22 is flat. Each of a plurality of third structural surfaces 22 may be flat. The plurality of third structural surfaces 22 may be arranged side by side in a direction perpendicular to thickness direction DT.

Fourth structural surface 23 faces second side DT2 in thickness direction DT. In the present embodiment, fourth structural surface 23 is flat. In the present embodiment, the entirety of thick portion 20 serves as portion 21 having the greatest thickness in thickness direction DT in sheet welded structure 1. Note that each of a plurality of fourth structural surfaces 23 may be flat. The plurality of fourth structural surfaces 23 may be arranged side by side in the direction perpendicular to thickness direction DT.

In the present embodiment, fourth structural surface 23 of thick portion 20 and second structural surface 13 of thin portion 10 are arranged side by side with each other in the direction perpendicular to thickness direction DT, and are flat.

The one or more connection portions 30 are arranged between the one or more thin portions 10 and the one or more thick portions 20. Connection portion 30 connects thin portion 10 to thick portion 20. In the present embodiment, a plurality of connection portions 30 are arranged so as to surround the respective thin portions 10.

The plurality of connection portions 30 have a fifth structural surface 31 and a sixth structural surface 34. Fifth structural surface 31 faces first side DT1 in thickness direction DT. Fifth structural surface 31 connects first structural surface 12 to third structural surface 22. Fifth structural surface 31 is inclined with respect to thickness direction DT. Of fifth structural surface 31, a first edge 32 connecting with first structural surface 12 is rounded when viewed from a direction in which first edge 32 extends. Of fifth structural surface 31, a second edge 33 connecting with third structural surface 22 is rounded when viewed from a direction in which second edge 33 extends. Sixth structural surface 34 is arranged side by side with fourth structural surface 23 of one or more thick portions 20 in the direction perpendicular to thickness direction DT, and is arranged side by side with second structural surface 13 of one or more thin portions 10, and further, sixth structural surface 34 is flat.

Note that, as described above, the one or more thin portions 10 and the one or more thick portions 20 can be arranged in various patterns, respectively. Fig. 13 is a plan view showing a sheet welded structure according to a modification. In Fig. 13, sheet welded structure 1 according to the modification is shown in a plan view similar to that of sheet welded structure 1 in Fig. 12. A sheet welded structure 1x according to the modification is sheet welded structure 1x manufactured using first member M1x having first pressing surface M11x shown in Fig. 8.

As shown in Fig. 13, in sheet welded structure 1x according to the modification, a plurality of thick portions 20x may be arranged in a dot-shaped pattern. Each of the plurality of thick portions 20x may have a substantially rectangular outer shape. The plurality of thick portions 20x are arranged in a continuous pattern. The plurality of thick portions 20x may be arranged side by side equidistantly in one direction and a direction perpendicular thereto, respectively.

Thin portion 10x in the modification may be arranged in a cross-hatch pattern. Thin portion 10x may be arranged so as to surround the plurality of thick portions 20x one by one.

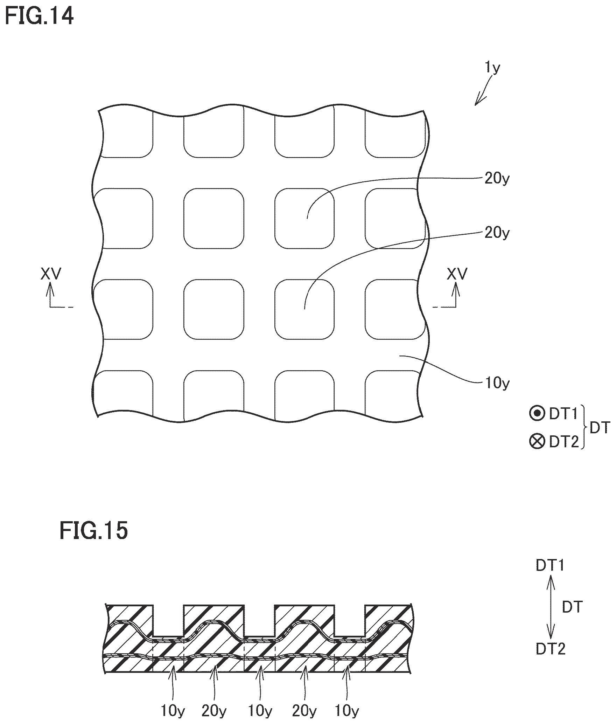

Fig. 14 is a plan view showing a sheet welded structure according to another modification. Fig. 15 is a sectional view showing the sheet welded structure of Fig. 14 as viewed in the direction of arrows XV-XV. In Fig. 14, a sheet welded structure ly according to the other modification is shown in a plan view similar to that of sheet welded structure 1 in Fig. 12.

As shown in Figs. 14 and 15, in sheet welded structure ly according to the other modification, a thin portion 10y and a thick portion 20y may be directly connected to each other.

Sheet welded structure 1 according to the present embodiment will be described in more detail. As shown in Figs. 5, 6, and 11, thin portion 10, thick portion 20, and connection portion 30 are composed of first sheet portion SP1 and second sheet portion SP2 in the manufacturing method described above. The one or more thin portions 10, the one or more thick portions 20, and the one or more connection portions 30 can include second base material layer SL2, one or more first reinforcement layers RL1, integrated layer ML, one or more second reinforcement layers RL2, and first base material layer SL1 melted and solidified in step S2 of the manufacturing method.

The one or more thin portions 10, the one or more thick portions 20, and the one or more connection portions 30 do not necessarily have to include first mixed portion MX1 and second mixed portion MX2. First mixed portion MX1 and second mixed portion MX2 are located at edge portions in a direction perpendicular to thickness direction DT of a region composed of thin portion 10, thick portion 20, and connection portion 30 in sheet welded structure 1 (hereinafter also referred to as "welded region").

First extending sheet portion 40 includes a portion of first sheet portion SP1, which has not been welded to second sheet portion SP2. First extending sheet portion 40 includes a portion of first sheet portion SP1, which has not been pressed by first member M1 in step S2 of the method of manufacturing sheet welded structure 1.

First extending sheet portion 40 extends from the welded region in the direction perpendicular to thickness direction DT. Second base material layer SL2 of first sheet portion SP1 is contiguous to second base material layer SL2 melted and solidified in the welded region. First base material layer SL1 of first sheet portion SP1 is contiguous to second mixed portion MX2.

Second extending sheet portion 50 includes a portion of second sheet portion SP2, which has not been welded to first sheet portion SP1. Second extending sheet portion 50 includes a portion of second sheet portion SP2, which has not been pressed by second member M2 in step S2 of the method of manufacturing sheet welded structure 1.

Second extending sheet portion 50 extends from the welded region in the direction perpendicular to thickness direction DT. In the present embodiment, second extending sheet portion 50 extends to the side opposite to first extending sheet portion 40. However, second extending sheet portion 50 may extend along first extending sheet portion 40 from the welded region. Third base material layer SL3 of second sheet portion SP2 is contiguous to third base material layer SL3 melted and solidified in the welded region. Fourth base material layer SL4 of second sheet portion SP2 is contiguous to first mixed portion MX1.

Sheet welded structure 1 according to the present embodiment satisfies relational expressions (5) and (6) below:
[Math 9] $\left(c-d\right) > {a}_{1}$ (5); and
[Math 10] $c < \left({a}_{1}+{a}_{2}\right)$ (6), where, as shown in Figs. 2 and 11, c is the thickness of portion 21 having the greatest thickness in thick portion 20, and d is the thickness of portion 11 having the smallest thickness in thin portion 10.

As indicated by relational expression (5) above, in sheet welded structure 1, the difference in thickness between thin portion 10 arranged in a pattern and thick portion 20 arranged in a pattern is relatively large. For this reason, the polyester-based resin of first sheet portion SP1 and the polyester-based resin of second sheet portion SP2 flow not only in thickness direction DT but also in a direction intersecting thickness direction DT (a direction from thin portion 10 toward thick portion 20) and are well mixed with each other. Further, as indicated by relational expression (6) above, sheet welded structure 1 is sufficiently compressed with respect to first sheet portion SP1 and second sheet portion SP2 before welding. Therefore, according to the present embodiment, sheet welded structure 1 can be provided in which first sheet portion SP1 and second sheet portion SP2 are firmly welded to each other.

Note that dimension of (c - d) is preferably greater than or equal to a₁ and not too large. For example, the length of c - d may be less than 1.5 times a₁, or may be less than or equal to 1.4 times, 1.3 times, 1.2 times, or 1.1 times a₁.

Sheet welded structure 1 further satisfies relational expressions (7) and (8) below:
[Math 11] ${a}_{1} = {a}_{2}$ (7); and
[Math 12] $d > \left(2c-3{a}_{1}\right)$ (8), where a₁ is a thickness of first sheet portion SP1 before being welded, and a₂ is a thickness of second sheet portion SP2 before being welded. In other words, a₁ may be a thickness of first extending sheet portion 40, and a₂ before being welded may be a thickness of second extending sheet portion 50.

As indicated by expression (8) above, the thickness of thin portion 10 is configured so as not to become too small. Thus, sheet welded structure 1 can be provided in which the formation of pinholes is suppressed.

Furthermore, in the present embodiment, both surfaces (third structural surface 22 and fourth structural surface 23) of thick portion 20 are both flat.

Thus, since thick portion 20 compressed as in expression (5) above is uniformly compressed, sheet welded structure 1 can be provided in which first sheet portion SP1 and second sheet portion SP2 are firmly welded to each other.

### <Container>

Next, a container that can include sheet welded structure 1 according to the present embodiment and a method of manufacturing the same will be described. First, a tube container including sheet welded structure 1 according to the present embodiment will be described.

### <Tube Container>

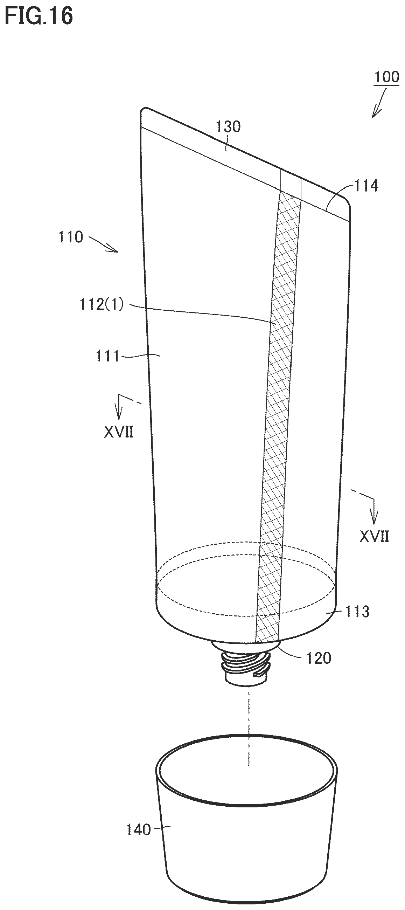

Fig. 16 is a perspective view showing a tube container including a sheet welded structure according to the present embodiment. As shown in Fig. 16, tube container 100 includes a body portion 110, a dispensing portion 120, an end seal portion 130, and a cap portion 140. Tube container 100 does not have to include cap portion 140.

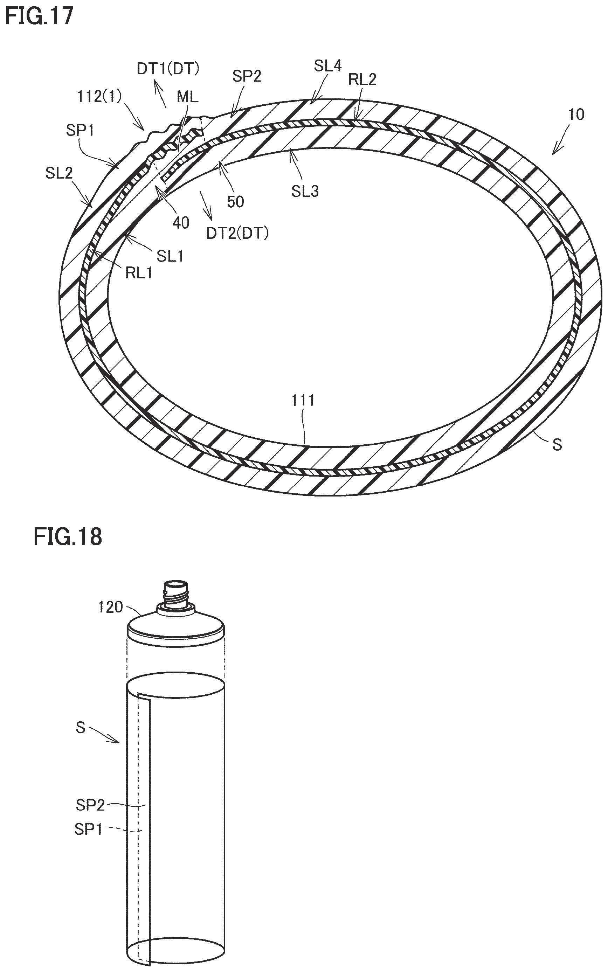

Fig. 17 is a schematic sectional view showing the tube container of Fig. 16 as viewed in the direction of arrows XVII-XVII. Fig. 18 is a schematic exploded perspective view of the tube container. Body portion 110 is formed by shaping a sheet S including first sheet portion SP1 and second sheet portion SP2 into a tube. Body portion 110 has sheet welded structure 1 according to the present embodiment as a side seal portion 112.

Thus, there can be provided tube container 100 which has improved recyclability because body portion 110 is formed of sheet S containing a polyester-based resin, and in which side seal portion 112 is formed more firmly.

Side seal portion 112 is formed by welding side edges of sheet S formed into a tubular shape to each other. In other words, in the present embodiment, first sheet portion SP1 and second sheet portion SP2 are a first side edge and a second side edge of sheet S, respectively.

In the present embodiment, first side DT1 in thickness direction DT of side seal portion 112 (sheet welded structure 1) is an outer side of body portion 110. Second side DT2 in thickness direction DT of side seal portion 112 (sheet welded structure 1) is a storage space side of body portion 110. Note that first side DT1 in thickness direction DT of side seal portion 112 may be the storage space side of body portion 110. Second side DT2 in thickness direction DT of side seal portion 112 may be the outer side of body portion 110. Side seal portion 112 (sheet welded structure 1) extends in a belt shape in body portion 110. Further, an uneven surface is formed on a surface of first side DT1 in thickness direction DT of side seal portion 112 (sheet welded structure 1), that is, the outer side of body portion 110.

Furthermore, in the present embodiment, first base material layer SL1 and third base material layer SL3 are contiguous to each other in sheet S. First base material layer SL1 and third base material layer SL3 are composed of a single film. Second base material layer SL2 and fourth base material layer SL4 are contiguous to each other in sheet S. Second base material layer SL2 and fourth base material layer SL4 are composed of a single film. One or more first reinforcement layers RL1 and one or more second reinforcement layers RL2 are contiguous to each other in sheet S. First reinforcement layer RL1 and second reinforcement layer RL2 corresponding thereto are composed of a single film.

Body portion 110 further has a main body portion 111, which is a portion other than the side seal portion. Main body portion 111 is connected to first extending sheet portion 40 and second extending sheet portion 50 of side seal portion 112 (sheet welded structure 1).

Dispensing portion 120 is joined to a first end 113 in an axial direction of body portion 110 formed into a tubular shape. End seal portion 130 is connected to a second end 114 in the axial direction of body portion 110 formed into a tubular shape.

Dispensing portion 120 is preferably composed of a resin composition containing a polyester-based resin as a main component. As the polyester-based resin in dispensing portion 120, the ones similar to the polyester-based resin in first base material layer SL1 and third base material layer SL3 can be used. From the viewpoint of recyclability of tube container 100, the polyester-based resin of dispensing portion 120 is more preferably polyethylene terephthalate such as homopolyethylene terephthalate or copolymerized polyethylene terephthalate obtained by copolymerizing ethylene glycol, terephthalic acid, and a third component, or glycol-modified polyethylene terephthalate, and further preferably homopolyethylene terephthalate. Further, from the viewpoint of moldability of dispensing portion 120, the polyester-based resin in dispensing portion 120 is preferably an amorphous polyester-based resin (such as amorphous polyethylene terephthalate and glycol-modified polyethylene terephthalate). Note that the polyester-based resin in dispensing portion 120 may be a crystalline polyester-based resin (e.g., crystalline polyethylene terephthalate). From the viewpoint of recyclability of tube container 100, the resin composition constituting dispensing portion 120 preferably contains only a polyester-based resin as a resin component. The resin composition constituting dispensing portion 120 may further contain conventionally known additives. Further, from the viewpoint of reducing environmental impact, the polyester-based resin in the resin composition is preferably made of a recycled raw material or a biomass-derived raw material, but from the viewpoint of reducing manufacturing costs of dispensing portion 120, the polyester-based resin in the resin composition is also preferably made of a virgin raw material.

In the present embodiment, dispensing portion 120 is an injection-molded product of a resin composition. The value of intrinsic viscosity (IV) of a polyester-based resin material used for molding dispensing portion 120 may be, for example, 0.60 or more and 0.90 or less when measured in accordance with JIS standard (K7390-1: 2015). The IV value 0.60 or more and 0.90 or less facilitates the molding of dispensing portion 120.

End seal portion 130 closes second end 114 in the axial direction of body portion 110. End seal portion 130 has a flat outer shape.

End seal portion 130 is formed by further bringing together the inner peripheral surfaces of sheet S formed into a tubular shape to form body portion 110 and welding the inner peripheral surfaces to each other. End seal portion 130 may be obtained by joining the inner peripheral surfaces of sheet S formed into a tubular shape by so-called hot air welding. Note that configuration of end seal portion 130 is not particularly limited as long as it seals second end 114 of body portion 110.

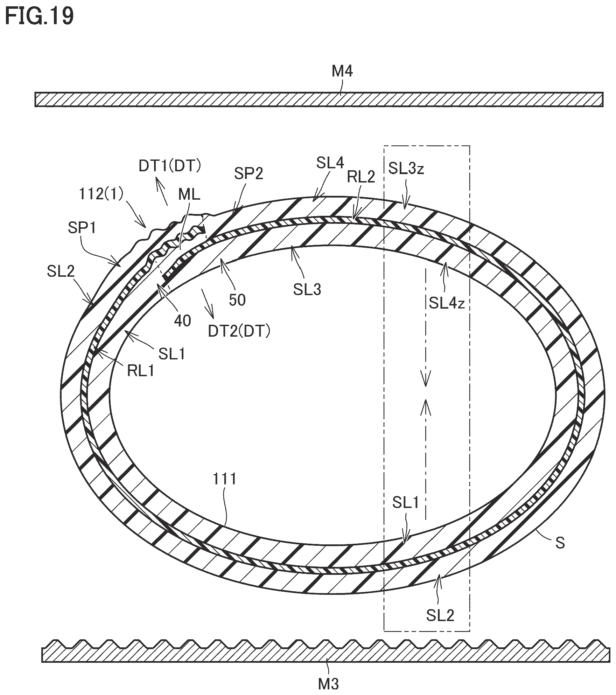

End seal portion 130 may have a configuration that sheet welded structure 1 according to the present embodiment can have. Fig. 19 is a schematic sectional view showing a sheet immediately before the formation of an end seal portion by ultrasonic welding. In Fig. 19, sheet S formed into a tubular shape is schematically shown from the sectional direction similar to the sectional direction of 17.

As shown in Fig. 19, end seal portion 130 can be formed by further sandwiching sheet S formed into a tubular shape between third member M3 and fourth member M4. One of third member M3 and fourth member M4 is an ultrasonic horn, and the other is an anvil. Third member M3 can have a configuration that first member M1 can have. Fourth member M4 can have a configuration that second member M2 has. At this time, side seal portion 112 provided for forming sheet S into a tubular shape is preferably arranged on the fourth member M4 side where a pressing surface is flat. Thereby, in the formation of end seal portion 130, the influence on sheet welded structure 1 in side seal portion 112 can be made relatively small.

As shown in Fig. 19, based on sheet welded structure 1 formed as end seal portion 130, it can be understood that a third base material layer SL3z is contiguous to second base material layer SL2 and a fourth base material layer SL4z is contiguous to first base material layer SL1 in sheet S. Then, based on sheet welded structure 1 formed as end seal portion 130, it can be understood that third base material layer SL3z and second base material layer SL2 are composed of a single film and fourth base material layer SL4z and first base material layer SL1 are composed of a single film.

Cap portion 140 is made of a resin composition. From the viewpoint of recyclability of tube container 100, cap portion 140 is preferably made of a resin composition containing a polyester-based resin as a main component. When tube container 100 includes cap portion 140, the content of a polyester-based resin such as polyethylene terephthalate of tube container 100 as a whole is preferably 95% by mass or more.

As the polyester-based resin in cap portion 140, the ones similar to the polyester-based resin in first base material layer SL1 can be used. From the viewpoint of recyclability of tube container 100, the polyester-based resin of cap portion 140 is preferably polyethylene terephthalate such as homopolyethylene terephthalate or copolymerized polyethylene terephthalate obtained by copolymerizing ethylene glycol, terephthalic acid, and a third component, or glycol-modified polyethylene terephthalate, and more preferably homopolyethylene terephthalate. Further, from the viewpoint of moldability of cap portion 140, the polyester-based resin in cap portion 140 is preferably an amorphous polyester-based resin (such as amorphous polyethylene terephthalate and glycol-modified polyethylene terephthalate).

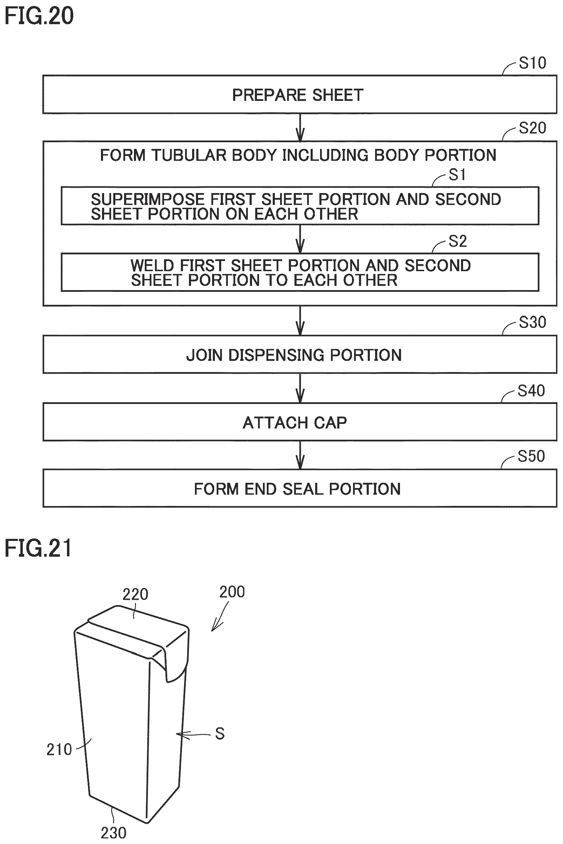

A method of manufacturing tube container 100 will be described in more detail. Fig. 20 is a flowchart showing a method of manufacturing a tube container according to the present embodiment. As shown in Fig. 20, the method of manufacturing a tube container according to the present embodiment includes preparing sheet S (step S10), forming a tubular body including body portion 110 (step S20), joining dispensing portion 120 to the tubular body (step S30), attaching cap portion 140 to dispensing portion 120 (step S40), and forming end seal portion 130 (step S50).

In step S10, sheet S including first sheet portion SP1 and second sheet portion SP2 is prepared. Step S20 includes superimposing first sheet portion SP1 and second sheet portion SP2 on each other while curling sheet S (S1), and welding first sheet portion SP1 and second sheet portion SP2 to each other (S2). Therefore, step S2 includes the method of manufacturing sheet welded structure 1 according to the present embodiment (see Fig. 4).

In step S30, dispensing portion 120 is joined to the tubular body including body portion 110 formed of sheet S. Dispensing portion 120 can be joined to the tubular body by so-called insert molding. Note that dispensing portion 120 may be joined to the tubular body by compression molding or ultrasonic welding instead of insert molding described above.

In step S40, cap portion 140 molded in advance is attached to dispensing portion 120. As a method of molding cap portion 140, a conventionally known method such as injection molding or compression molding is adoptable. When tube container 100 does not include cap portion 140, the method of manufacturing a tube container does not have to include step S5.

In step S50, as described above, the inner surfaces of the tubular body are welded to each other by hot air welding or ultrasonic welding (see Fig. 19), whereby end seal portion 130 is formed.

As described above, tube container 100 according to the present embodiment is manufactured. Although the method of manufacturing tube container 100 according to the present embodiment includes step S40 and step S50 in this order, this order may be reversed. Further, when manufacturing a tube container containing contents, for example, after step S30 or step S40 and before step S50, contents may be filled from an opening on a side opposite to dispensing portion 120 of the tubular body. Further, when manufacturing a tube container containing contents, the contents may be filled into the tubular body from dispensing portion 120 after step S50.

As described above, the method of manufacturing a tube container according to the present embodiment includes forming body portion 110 by forming sheet S including first sheet portion SP1 and second sheet portion SP2 into a tubular shape such that side seal portion 112 composed of sheet welded structure 1 manufactured by the method of manufacturing a sheet welded structure described above is formed.

Thus, there can be provided tube container 100 which has improved recyclability because body portion 110 is formed of sheet S containing a polyester-based resin, and which side seal portion 112 is formed more firmly.

Further, tube container 100 according to the embodiment described above has excellent recyclability because sheet S constituting tubular body portion 110 can contain a polyester-based resin as a main component. Further, in tube container 100 described above, tubular body portion 110, dispensing portion 120, and end seal portion 130 as a whole contain a polyester-based resin as a main component, whereby the recyclability of tube container 100 can be further improved. Further, since tube container 100 as a whole contains a polyester-based resin as a main component, the recyclability of tube container 100 can be further improved. Therefore, tube container 100 according to an embodiment of the present invention is in line with a sustainable circular economy required by sustainable development goals (SDGs), and can greatly contribute to a reduction in plastic waste. Note that in the present specification, the description that a certain member contains a polyester-based resin as a main component can mean that the content of the polyester-based resin in the certain member is 85% by mass or more, 90% by mass or more, 95% by mass or more, or 99% by mass or more.

### <Tube Container Containing Contents>

In body portion 110 of tube container 100 according to the present embodiment, since resins (first base material layer SL1 and third base material layer SL3) directly coming into contact with contents are a polyester-based resin, adsorption of the above-described components, which are adsorbable to a polyolefin-based resin, to tube container 100, or swelling of tube container 100 due to absorption of these components can be relatively suppressed. Further, since side seal portion 112 is firmly joined, leakage of a surfactant from side seal portion 112 to the outside can be suppressed.

Examples of the oil-soluble compound include tocopherols such as DL-α-tocopherol, D-δ-tocopherol, DL-α-tocopherol acetate, DL-α-tocopherol succinate, DL-α-tocopherol nicotinate, and DL-α-tocopherol linoleate; and 3-methyl-4-isopropylphenol (also known as isopropylmethylphenol). The oil-soluble compound is contained in the contents when, for example, the contents are pharmaceuticals, foods, or cosmetics. The tocopherols are so-called vitamin E and derivatives thereof, and are blended into the contents in expectation of anti-aging action, peripheral vasodilating action, blood circulation promoting action, or any other action. 3-Methyl-4-isopropylphenol is blended into cosmetics such as acne cosmetics, pharmaceuticals, or the like as a bactericide or a preservative.

Examples of the oily component include triacylglycerol; diacylglycerol; natural fats and oils such as rapeseed oil, canola oil, sesame oil, sunflower oil, corn oil, rice oil, grape oil, camellia oil, macadamia nut oil, olive oil, castor oil, safflower oil, soybean oil, tea seed oil, cacao butter, coconut oil, hydrogenated coconut oil, palm oil, sumac wax, hydrogenated castor oil, beeswax, candelilla wax, carnauba wax, lanolin, liquid lanolin, jojoba wax, hard lanolin, polyoxyethylene lanolin alcohol ether, and polyoxyethylene cholesterol ether; hydrocarbon-based fats and oils such as liquid paraffin, ozokerite, squalene, paraffin, ceresin, petrolatum, and microcrystalline wax; synthetic oily components such as isopropyl myristate, octyldodecyl myristate, isopropyl palmitate, cholesteryl 12-hydroxystearate, ethylene glycol di-2-ethylhexanoate, dipentaerythritol fatty acid ester, pentaerythritol tetra-2-ethylhexanoate, glycerin tri-2-ethylhexanoate, trimethylolpropane triisostearate, cetyl-2-ethylhexanoate, and castor oil fatty acid methyl ester; and silicones such as: chain polysiloxanes including dimethylpolysiloxane, methylphenylpolysiloxane, and methylhydrogenpolysiloxane; cyclic polysiloxanes including decamethylpolysiloxane, dodecamethylpolysiloxane, and tetramethyltetrahydrogenpolysiloxane; silicone resins capable of forming a three-dimensional network structure; and silicone rubbers. These oily components are contained in the contents when, for example, the contents are cosmetics or foods such as mayonnaise.

Examples of the volatile oily component include silicone oil having a relatively low molecular weight, hydrocarbon oil having a relatively low molecular weight, and ether oil. An example of the silicone oil is linear silicone or cyclic silicone. Specific examples of the silicone oil include chain dimethylpolysiloxane and cyclic dimethylpolysiloxane. The chain dimethylpolysiloxane may be either linear or branched, and examples of the linear one include dimethylpolysiloxane (1.5 cs) and dimethylpolysiloxane (2 cs), and examples of the branched one include methyl trimethicone, tris(trimethylsilyl)methylsilane, and tetrakis(trimethylsilyl)silane. Examples of the cyclic dimethylpolysiloxane include octamethylcyclotetrasiloxane, decamethylcyclopentasiloxane, and dodecamethylcyclohexasiloxane. Examples of the hydrocarbons include isododecane, isotridecane, isohexadecane, light isoparaffin, and light liquid isoparaffin, and an example of the ether oil is ethyl perfluorobutyl ether. These volatile oily components are contained in the contents mainly when the contents are cosmetics such as sunscreen oil-in-water emulsified cosmetics.

Examples of the fragrance include natural fragrances such as peppermint oil, spearmint oil, anise oil, eucalyptus oil, wintergreen oil, cassia oil, clove oil, thyme oil, sage oil, lemon oil, orange oil, Japanese mint oil, cardamom oil, coriander oil, mandarin oil, lime oil, lavender oil, rosemary oil, laurel oil, chamomile oil, caraway oil, marjoram oil, bay oil, lemongrass oil, origanum oil, pine needle oil, neroli oil, rose oil, jasmine oil, grapefruit oil, sweetie oil, yuzu oil, cinnamon oil, perilla oil, wintergreen oil, clove oil, pimento oil, tea tree oil, davana oil, star anise oil, fennel oil, diatom oil, basil oil, iris concrete, absolute peppermint, absolute rose, orange flower, and nutmeg, or fragrances obtained by processing these natural fragrances (fore-shot cut, after-shot cut, fractional distillation, liquid-liquid extraction, essence conversion, powder fragrance conversion, etc.); single fragrances such as camphor, menthol, carvone, benzyl succinate, anethole, cineole, methyl salicylate, cinnamic aldehyde, eugenol, methyl eugenol, 3-1-menthoxypropane-1,2-diol, thymol, linalool, linalyl acetate, limonene, menthone, menthyl acetate, N-substituted-para-menthane-3-carboxamide, pinene, octyl aldehyde, citral, pulegone, carvyl acetate, anisaldehyde, ethyl acetate, ethyl butyrate, allyl cyclohexane propionate, methyl anthranilate, ethyl methyl phenyl glycidate, vanillin, undecalactone, hexanal, butanol, isoamyl alcohol, hexenol, dimethyl sulfide, cyclotene, furfural, trimethylpyrazine, ethyl lactate, ethyl thioacetate, ocimene, n-decyl alcohol, methyl acetate, citronellyl acetate, ethyl linalool, vanillin, and benzaldehyde; and compound flavors such as strawberry flavor, apple flavor, banana flavor, pineapple flavor, grape flavor, mango flavor, butter flavor, milk flavor, fruit mix flavor, and tropical fruit flavor. These fragrances/flavors are contained in the contents, for example, when the contents are oral compositions. Further, the fragrances/flavors may be ones contained in the contents as a flavor component of foods such as wasabi, Japanese mustard, and mustard.

Examples of the sweetener include saccharin, saccharin sodium, acesulfame potassium, stevia extract, stevioside, neohesperidyl dihydrochalcone, glycyrrhizin, perillartine, thaumatin, aspartylphenylalanine methyl ester, methoxycinnamic aldehyde, palatinose, palatinit, erythritol, maltitol, xylitol, and lactitol. These sweeteners are contained in the contents when, for example, the contents are oral compositions.

Examples of the surfactant include anionic surfactants, cationic surfactants, amphoteric surfactants, and nonionic surfactants. Examples of the anionic surfactant include fatty acid soap, higher alkyl sulfate ester salts, alkyl ether sulfate ester salts, N-acylsarcosinic acid, higher fatty acid amide sulfonate, phosphate ester salts, sulfosuccinates, alkylbenzene sulfonates, higher fatty acid ester sulfate ester salts, N-acyl glutamates, sulfated oils, POE-alkyl ether carboxylic acids, POE-alkyl allyl ether carboxylates, α-olefin sulfonates, higher fatty acid ester sulfonates, secondary alcohol sulfate ester salts, higher fatty acid alkylolamide sulfate ester salt, sodium lauroyl monoethanolamide succinate, ditriethanolamine N-palmitoyl aspartate, and sodium casein. Examples of the cationic surfactant include alkyltrimethylammonium salts, alkylpyridinium salts, distearyldimethylammonium chloride, dialkyldimethylammonium salt, poly(N,N'-dimethyl-3,5-methylenepiperidinium) chloride, alkyl quaternary ammonium salts, alkyldimethylbenzylammonium chloride, alkylisoquinolinium salts, dialkylmorpholinium salts, POE-alkylamines, alkylamine salts, polyamine fatty acid derivatives, amyl alcohol fatty acid derivatives, benzalkonium chloride, and benzethonium chloride. Examples of the amphoteric surfactant include imidazoline-based amphoteric surfactants and betaine-based surfactants. Examples of the nonionic surfactant include polyoxyethylene hydrogenated castor oil, polyoxyethylene alkyl ether, sucrose fatty acid ester, alkyl glycoside, polyoxyethylene-polyoxypropylene block copolymers, polyoxyethylene ethers of glycerin esters, fatty acid alkylolamides, and glycerin fatty acid esters.

### <Pack Container>

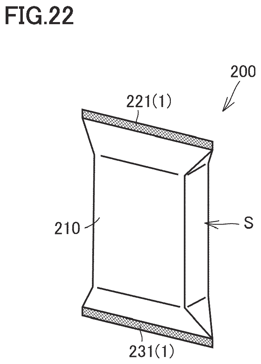

Lastly, a pack container including sheet welded structure 1 according to the present embodiment will be described. Fig. 21 is a perspective view showing a pack container including a sheet welded structure according to the present embodiment. Fig. 22 is a perspective view showing a pack container including a sheet welded structure according to the present embodiment, which is partially unfolded.

As shown in Figs. 21 and 22, a pack container 200 includes a body portion 210, a top portion 220, and a bottom portion 230. Pack container 200 may be substantially composed of only sheet S.

Body portion 210 in pack container 200 can be formed of sheet S similar to sheet S used when manufacturing tube container 100. Body portion 210 has a rectangular tubular outer shape. Similarly to tube container 100, body portion 210 can include a side seal portion (not shown) including sheet welded structure 1 on a back surface or a front surface.

Top portion 220 and bottom portion 230 close a first end and a second end of rectangular tubular body portion 210, respectively. Top portion 220 and bottom portion 230 can be formed by welding the inner surfaces to each other at the first end and the second end of sheet S formed into a tubular shape to form body portion 210, respectively. More specifically, top portion 220 and bottom portion 230 can be formed by folding a portion of sheet S formed in this manner, which is located on a first side relative to body portion 210 and a portion located on a second side of body portion 210, respectively.

Top portion 220 can have a first end seal portion 221. First end seal portion 221 can have a configuration that end seal portion 130 of tube container 100 can have. In other words, first end seal portion 221 can have sheet welded structure 1 according to the present embodiment.

Bottom portion 230 can have a second end seal portion 231. Second end seal portion 231 can have a configuration that end seal portion 130 of tube container 100 can have. In other words, second end seal portion 231 can have sheet welded structure 1 according to the present embodiment.

### (Notes)

As described above, an embodiment of the present invention includes disclosure as follows.

### <Configuration 1>

A method of manufacturing a sheet welded structure, the method including:
superimposing a first sheet portion and a second sheet portion on each other in a thickness direction, the first sheet portion containing a polyester-based resin and having a thickness a₁, the second sheet portion containing a polyester-based resin and having a thickness a₂; and
welding the first sheet portion and the second sheet portion to each other by pressing the first sheet portion with a first member from a first side in the thickness direction and pressing the second sheet portion with a second member from a second side in the thickness direction against the first sheet portion and the second sheet portion superimposed on each other, wherein
the first member is one of an anvil and an ultrasonic horn, and has a first pressing surface that presses the first sheet portion,
the second member is the other of the anvil and the ultrasonic horn, and has a second pressing surface that presses the second sheet portion,
the first pressing surface includes
   one or more first surfaces arranged in a pattern and including a surface closest to the first sheet portion, when viewed from the first sheet portion at the start of pressing by the first member, and
   one or more second surfaces arranged in a pattern so as not to overlap with the one or more first surfaces, located further away than the one or more first surfaces, and including a surface farthest from the first sheet portion, when viewed from the first sheet portion at the start of pressing by the first member, and
relational expressions (1) and (2) below are satisfied:
   [Math 13] $b > {a}_{1}$ (1); and
   [Math 14] $c ′ < \left({a}_{1}+{a}_{2}\right)$ (2),
where b is a distance in the thickness direction between the surface closest to the first sheet portion on the one or more first surfaces and the surface farthest from the first sheet portion on the one or more second surfaces at the start of pressing against the first sheet portion by the first member, and c' is a distance in the thickness direction between the second surface and the second pressing surface when the first member and the second member come closest to each other during welding of the first sheet portion and the second sheet portion.

### <Configuration 2>

The method of manufacturing a sheet welded structure according to <Configuration 1>, further satisfying relational expressions (3) and (4) below:
[Math 15] ${a}_{1} = {a}_{2}$ (3); and
[Math 16] $b < \left(3{a}_{1}-c′\right)$ (4),

### <Configuration 3>

The method of manufacturing a sheet welded structure according to <Configuration 1> or <Configuration 2>, wherein the one or more second surfaces and the second pressing surface are both flat.

### <Configuration 4>

A method of manufacturing a tube container including a body portion, the method including:
forming the body portion by forming a sheet including the first sheet portion and the second sheet portion into a tubular shape such that a side seal portion is formed, the side seal portion including a sheet welded structure manufactured by the method of manufacturing a sheet welded structure according to any one of <Configuration 1> to <Configuration 3>.

### <Configuration 5>

A sheet welded structure formed by superimposing a first sheet portion and a second sheet portion on each other in a thickness direction such that the first sheet portion is located on a first side in the thickness direction and the second sheet portion is located on a second side in the thickness direction, and welding the first sheet portion and the second sheet portion to each other, the first sheet portion containing a polyester-based resin and having a thickness a₁, the second sheet portion containing a polyester-based resin and having a thickness a₂, the sheet welded structure including:
one or more thin portions arranged in a pattern and including a thinnest portion having a smallest thickness in the thickness direction in the sheet welded structure, when the sheet welded structure is viewed from the first side in the thickness direction; and
one or more thick portions arranged in a pattern so as not to overlap with the one or more thin portions, having a thickness greater in the thickness direction than the one or more thin portions, and including a thickest portion having a greatest thickness in the thickness direction in the sheet welded structure, when the sheet welded structure is viewed from the first side in the thickness direction,
wherein relational expressions (5) and (6) below are satisfied:
   [Math 17] $\left(c-d\right) > {a}_{1}$ (5); and
   [Math 18] $c < \left({a}_{1}+{a}_{2}\right)$ (6),
where c is the thickness of the thickest portion in the thick portion, and d is the thickness of a thinnest portion in the thin portion.

### <Configuration 6>

The sheet welded structure according to <Configuration 5>, wherein relational expressions (7) and (8) below are satisfied:
[Math 19] ${a}_{1} = {a}_{2}$ (7); and
[Math 20] $d > \left(2c-3{a}_{1}\right)$ (8),

### <Configuration 7>

The sheet welded structure according to <Configuration 5> or <Configuration 6>, wherein both surfaces of the one or more thick portions are flat.

### <Configuration 8>

A tube container including a body portion, wherein the body portion is formed by shaping a sheet including the first sheet portion and the second sheet portion into a tube, and has the sheet welded structure according to any one of <Configuration 5> to <Configuration 7> as a side seal portion.

The embodiment disclosed herein should be considered as illustrative and non-restrictive in every respect. The scope of the present invention is indicated by the claims rather than the above description, and is intended to encompass all modifications within the meaning and scope equivalent to the claims.

### REFERENCE SIGNS LIST

1, 1x, ly sheet welded structure; 10, 10x, 10y thin portion; 12 first structural surface; 13 second structural surface; 20, 20x, 20y thick portion; 22 third structural surface; 23 fourth structural surface; 30 connection portion; 31 fifth structural surface; 32 first edge; 33 second edge; 34 sixth structural surface; 40 first extending sheet portion; 50 second extending sheet portion; 100 tube container; 110 body portion; 111 main body portion; 112 side seal portion; 113 first end; 114 second end; 120 dispensing portion; 130 end seal portion; 140 cap portion; 200 pack container; 210 body portion; 220 top portion; 221 first end seal portion; 230 bottom portion; 231 second end seal portion; AL adhesive layer; BL1 first barrier layer; BL2 second barrier layer; M1, M1x first member; M11y, M11x, M11 first pressing surface; M11a, M11ax first surface; M11b, M11bx second surface; M11cy, M11c third surface; M12 first edge; M13 second edge; M2 second member; M21 second pressing surface; M3 third member; M4 fourth member; ML integrated layer; MX1 first mixed portion; MX2 second mixed portion; RL1 first reinforcement layer; RL2 second reinforcement layer; S sheet; SE2 second end surface; SL1 first base material layer; SL2 second base material layer; SL3, SL3z third base material layer; SL4, SL4z fourth base material layer; SP1 first sheet portion; SP2 second sheet portion.

## Claims

1. A method of manufacturing a sheet welded structure, the method comprising:
superimposing a first sheet portion and a second sheet portion on each other in a thickness direction, the first sheet portion containing a polyester-based resin and having a thickness a₁, the second sheet portion containing a polyester-based resin and having a thickness a₂; and
welding the first sheet portion and the second sheet portion to each other by pressing the first sheet portion with a first member from a first side in the thickness direction and pressing the second sheet portion with a second member from a second side in the thickness direction against the first sheet portion and the second sheet portion superimposed on each other, wherein
the first member is one of an anvil and an ultrasonic horn, and has a first pressing surface that presses the first sheet portion,
the second member is the other of the anvil and the ultrasonic horn, and has a second pressing surface that presses the second sheet portion,
the first pressing surface includes
one or more first surfaces arranged in a pattern and including a surface closest to the first sheet portion when viewed from the first sheet portion at the start of pressing by the first member, and
one or more second surfaces arranged in a pattern so as not to overlap with the one or more first surfaces, located further away than the one or more first surfaces, and including a surface farthest from the first sheet portion, when viewed from the first sheet portion at the start of pressing by the first member, and
relational expressions (1) and (2) below are satisfied: $b > {a}_{1}$ (1); and $c ′ < \left({a}_{1}+{a}_{2}\right)$ (2),
where b is a distance in the thickness direction between the surface closest to the first sheet portion on the one or more first surfaces and the surface farthest from the first sheet portion on the one or more second surfaces at the start of pressing against the first sheet portion by the first member, and c' is a distance in the thickness direction between the second surface and the second pressing surface when the first member and the second member come closest to each other during welding of the first sheet portion and the second sheet portion.

2. The method of manufacturing a sheet welded structure according to claim 1, further satisfying relational expressions (3) and (4) below: ${a}_{1} = {a}_{2}$ (3); and $b < \left(3{a}_{1}-c′\right)$ (4).

3. The method of manufacturing a sheet welded structure according to claim 1, wherein the one or more second surfaces and the second pressing surface are both flat.

4. A method of manufacturing a tube container including a body portion, the method comprising:
forming the body portion by forming a sheet including the first sheet portion and the second sheet portion into a tubular shape such that a side seal portion is formed, the side seal portion including a sheet welded structure manufactured by the method of manufacturing a sheet welded structure according to any one of claims 1 to 3.

5. A sheet welded structure formed by superimposing a first sheet portion and a second sheet portion on each other in a thickness direction such that the first sheet portion is located on a first side in the thickness direction and the second sheet portion is located on a second side in the thickness direction, and welding the first sheet portion and the second sheet portion to each other, the first sheet portion containing a polyester-based resin and having a thickness a₁, the second sheet portion containing a polyester-based resin and having a thickness a₂, the sheet welded structure comprising:
one or more thin portions arranged in a pattern and including a thinnest portion having a smallest thickness in the thickness direction in the sheet welded structure, when the sheet welded structure is viewed from the first side in the thickness direction; and
one or more thick portions arranged in a pattern so as not to overlap with the one or more thin portions, having a thickness greater in the thickness direction than the one or more thin portions, and including a thickest portion having a greatest thickness in the thickness direction in the sheet welded structure, when the sheet welded structure is viewed from the first side in the thickness direction,
wherein relational expressions (5) and (6) below are satisfied: $\left(c-d\right) > {a}_{1}$ (5); and $c < \left({a}_{1}+{a}_{2}\right)$ (6),
where c is the thickness of the thickest portion in the thick portion, and d is the thickness of a thinnest portion in the thin portion.

6. The sheet welded structure according to claim 5, wherein relational expressions (7) and (8) below are satisfied: ${a}_{1} = {a}_{2}$ (7); and $d > \left(2c-3{a}_{1}\right)$ (8).

7. The sheet welded structure according to claim 5, wherein both surfaces of the one or more thick portions are flat.

8. A tube container comprising a body portion,
wherein the body portion is formed by shaping a sheet including the first sheet portion and the second sheet portion into a tube, and has the sheet welded structure according to any one of claims 5 to 7 as a side seal portion.
